(19) Europäisches Patentamt

European Patent Office

Office européen des brevets

(11) **EP 0 610 189 B1**

(12) **EUROPEAN PATENT SPECIFICATION**

(45) Date of publication and mention
of the grant of the patent:
**08.04.1998 Bulletin 1998/15**

(21) Application number: **92901622.8**

(22) Date of filing: **28.10.1991**

(51) Int Cl.6: **G05B 13/02**

(86) International application number:
**PCT/US91/07957**

(87) International publication number:
**WO 93/09481 (13.05.1993 Gazette 1993/12)**

(54) **AN IMPROVED SELF-TUNING CONTROLLER**

SELBSTEINSTELLENDER REGLER

UNITE DE CONTROLE AMELIOREE A REGLAGE AUTOMATIQUE

(84) Designated Contracting States:
**AT BE CH DE DK ES FR GB GR IT LI LU NL SE**

(43) Date of publication of application:
**17.08.1994 Bulletin 1994/33**

(73) Proprietor: **THE FOXBORO COMPANY**
**Foxboro, MA 02035 (US)**

(72) Inventors:
• **HANSEN, Peter, D.**
**Wellesley Hills, MA 02181 (US)**
• **BRISTOL, Edgar, H.**
**Foxboro, MA 02035 (US)**

(74) Representative:
**Blumbach, Kramer & Partner GbR**
**Radeckestrasse 43**
**81245 München (DE)**

(56) References cited:
**US-A- 4 602 326**

• **ISA TRANSACTIONS. vol. 27, no. 2, 1988,
PITTSBURGH US pages 43 - 50; F. RADKE:
'MICROPROCESSOR-BASED ADAPTIVE
PID-CONTROLLERS'**
• **PROCEEDINGS OF THE 27TH IEEE
CONFERENCE ON DECISION AND CONTROL
vol. 3/3, December 1988, AUSTIN US pages 1947
- 1951; MAURICIO ALVES DA SILVA ET AL.: 'A
RULE BASED PROCEDURE FOR SELFTUNING
PID CONTROLLERS'**
• **PATENT ABSTRACTS OF JAPAN vol. 12, no. 259
(P-733)21 July 1988 & JP,A,63 046 502
( YOKOKAWA ELECTRIC CORP ) 27 February
1988**
• **PATENT ABSTRACTS OF JAPAN vol. 13, no. 572
(P-978)18 December 1989 & JP,A,1 239 603
( TOSHIBA CORP ) 25 September 1989**

**Description**

This invention relates to self-tuning adaptive controllers for controlling a process and more particularly to pattern-recognition, self-tuning controllers.

The pattern recognition approach to self-tuning is unique. It uses direct-performance feedback of a monitored process variable to determine the required action for optimizing the process. More specifically, a pattern-recognition, self-tuning controller continuously monitors and automatically evaluates a closed-loop response pattern of a measured process variable to naturally occurring, unmeasured upsets caused by a change in set point or load. After each upset, closed-loop error response characteristics such as overshoot and decay are identified and compared with desired characteristics. Differences between the desired characteristics and the measured characteristics are then used to automatically generate new tuning values for adjusting the controller according to the requirements of the process in order to achieve an error response target shape. The target shape is chosen to approximately minimize integrated absolute error.

The first successful adaptive process control system to automatically identify and evaluate process response characteristics of the closed-loop response pattern was invented by Edgar H. Bristol, II and is disclosed in U.S. Patent No. 3,798,426. According to Bristol's method, the adaptation system is triggered by detecting the closed-loop response pattern resulting from an upset having a magnitude which exceeds a preselected noise band. Once triggered, dead and rise times are identified by measuring the time required for the response pattern to reach predetermined percentages of the extremum value of the upset during its first half cycle. The dead time is assumed to bear a significant relationship to any process dead time which is most apparent early in the measured variable response, and rise time is assumed to bear a significant relationship to process closed-loop natural period.

The measured rise time is scaled to establish evaluation intervals for the adaptation process. Scaling constants, used to determine these intervals, are selected so that the first half cycle in a resonant response is developed during one evaluation interval and the first full cycle is fully developed during another. The response pattern is evaluated by calculating the integrated difference between the measured process control error, normalized by the magnitude of the first error response peak, and a target value for each of the evaluation intervals. The integrated differences are used to adapt the operating parameters of the controller to improve control action during the next process upset.

For an effective adaptive process control system, several critical parameters must be specified by an operator. For example, the proper selection of scaling constants is critical for defining the appropriate evaluation intervals. Universal scaling constants cannot be used for different types of processes. This control system also requires the operator to select an appropriate target value for each evaluation interval. These target values are typically derived from the operator's experience with a given process.

An improved pattern-recognition, self-tuning controller was developed by Thomas W. Kraus. According to Kraus' method, the adaptive process is initiated when the error exceeds a nominal noise threshold. Once initiated, the closed-loop response pattern is monitored to detect the first three successive extremum values or "peaks" and their times of occurrence relative to the first peak.

Since it is common to find an overdamped control loop response without three peaks, Kraus' adaptive process automatically recognizes the response as overdamped if, after a pre-specified wait period after verifying the first peak, the second peak is not found. If a second peak is found, the third peak is sought for a time period proportional to the time between the first and second peaks. If the second or third peak is not detected, the search for peaks is terminated and "pseudo" peak values are assigned.

Characteristics of the closed-loop response pattern, such as overshoot, damping, and period, are then calculated using the measured extremum values of the response pattern. Differences between these measured characteristics and desired characteristics are then used to calculate new control operating parameters to optimize the control action. This method is described in greater detail in U.S. Patent No. 4,602,326, issued to Thomas Kraus, and entitled, "Pattern-recognition, Self-tuning Controller." As described in both patents to Bristol and Kraus, which are incorporated by reference, the system tunes the controller for the last disturbance. This can result in non-optimum tuning of the controller for the next disturbance, if the process is nonlinear.

Kraus' system also has critical parameters which must be specified by an operator. For example, choosing the pre-specified wait period in Kraus' system is critical, particularly when the process operates over a wide range of conditions. This wait period is critical because it also establishes a wait time before the peak search is activated. If it is set improperly, the system may not operate efficiently. The system also has a tendency to tighten the tuning of the process when the second and third peaks are lost in the noise band. After several disturbances, the response can become excessively oscillatory, causing the system to overcorrect the process which results in overdampinp the response. Further, thresholds for the noise band are either user-selected or determined during a pretuning operation for an open loop condition. It does not adaptively respond to condition changes in a closed-loop process.

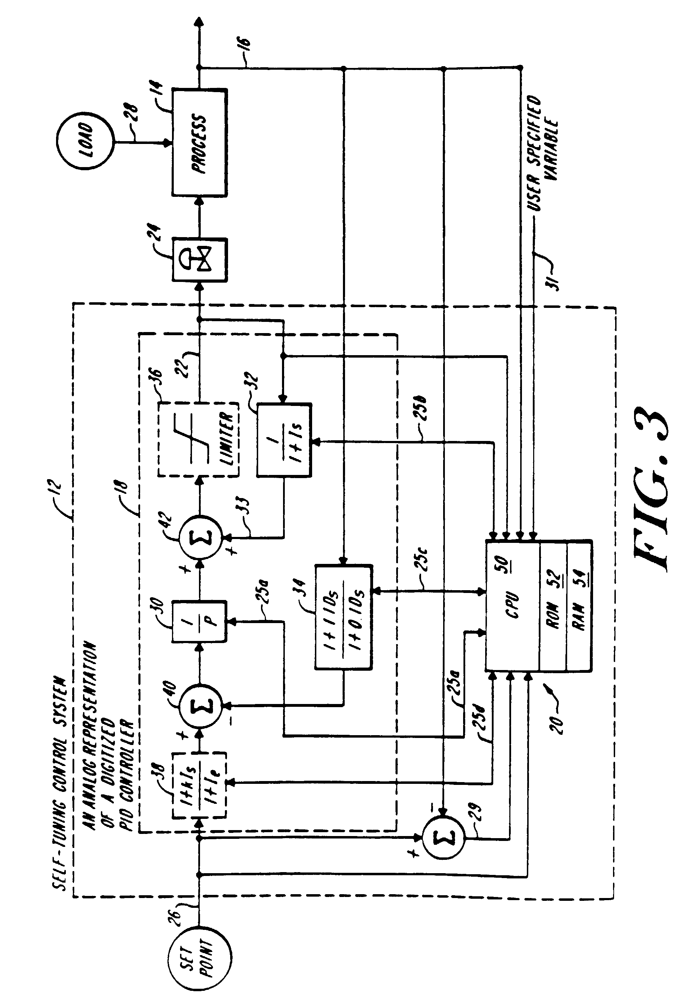

"ISA Transactions", Volume 27, No 2, 1988, pages 43 to 50, is related to a pattern recognition adaptive PID controller that relies on a Ziegler-Nichols method for tuning controller parameters. A process reference model is constructed and incorporated into the internal structure of the controller, as shown in Fig. 3. The output of the controller is connected to both the actual process and the process model wherein the process type is assumed, for example, as being the two-lag delay type as given by equation 1. The controller is then tuned based on the parameters of the process model.

"Proceedings of the 27th IEEE Conference on Decision and Control", Volume 3/3, 1988, pages 1947 to 1951, discloses a self-tuning PID controller that uses a series of expert system rules and Ziegler-Nichols tuning to control oscillating responses. A half-period of the error response may be measured and a Ziegler-Nichols ratio may be used for the integral-time to half-period ratio to compute a new integral-time parameter.

It is an object of the present invention to provide an adaptive controller having a tuning algorithm that is sensitive to the pattern features of the error response to a disturbance but less sensitive to the disturbance's type or shape and its location relative to a dominant process lag.

It is a further object of the present invention to provide a faster recovery from overdamped tuning by locating a quasi second or third peak using a knee detection scheme.

It is a further object of the present invention to reduce the number of critical parameters the operator must specify to achieve the desired optimized control action.

It is a further object of the present invention to prevent detuning with respect to one type of disturbance when a second type of disturbance or a set-point change occurs.

It is a further object of the present invention to prevent adaptive tuning when both the target and measured control error pattern features cannot be distinguished from noise.

It is a further object of the present invention to adaptively determine a wait time after detecting a peak to insure that additional peaks cannot be found before terminating the search for those peaks.

It is a further objective of the present invention to tune a nonlinear process at the beginning of a response transient using successful past tunings.

it is a further object of the present invention to provide a method for updating the noise band during quiet periods between isolated error responses.

It is a further object of the present invention to provide a self-tuning controller which determines a process type parameter, which classifies the process between dominant lag and dominant delay, to aid in the selection of tuning parameters that are appropriate for the particular type of process.

The present invention provides a method for automatically adjusting the control parameters of a self-tuning controller, as defined in claim 1 or 24, as well as a self-tuning control system as defined in claim 28.

In general, the invention features a self-tuning controller that characterizes a closed-loop error response for determining appropriate control parameter changes to improve the performance of the process in response to a disturbance. This error response or error signal can be calculated directly from a process controlled variable if the user is only interested in adapting only one parameter such as the proportional band of the controller.

However, in the preferred embodiment, the error signal is calculated as the difference between a set point and the measured process variable signal in order to automatically adjust more than one parameter of the controller. A realization of the present invention is that, by a judicious selection of pattern features available from the error signal, the adaptation of control parameters can be made less sensitive to the disturbance shape and location.

To that end, the present invention provides a method for automatically adjusting the control parameters of the self-tuning controller used to regulate a process having a measured process variable signal. The method includes generating an error signal representing a closed-loop response of the process to an upset condition. Three successive amplitude values of the error signal are selected and measured to produce measured decay and overshoot characteristics. The three successive amplitudes are selected such that the measured decay characteristic is greater than the overshoot characteristic. At least one of the control parameters of the controller is then automatically adjusted to reduce the difference between one or both of the measured characteristics and target characteristics.

In accordance with one aspect of the invention, the type of process to be regulated is determined and the determined process type is used to calculate changes in the control parameters for achieving rapid convergence to the target characteristic. Note, that the type of process may be declared by the user or determined automatically from information provided by the error response and the current controller parameters. More specifically, the process type parameter is used as an interpolating or extrapolating factor relating controller parameters to response characteristics based on predetermined data from at least two different processes.

The step of measuring amplitude values can include measuring four or more successive amplitude values of local extrema of the error signal. If the fourth amplitude value is needed but cannot be detected, it can be estimated using the previously measured amplitudes. Three of the four successive amplitude values are then combined to determine the decay and overshoot characteristic values to adjust at least one of the control parameters. The step of locating and measuring the amplitudes may further include locating a knee of the error signal later in time to a first local extremum. The time interval between a first local extremum and the knee determines a time scale of the error signal response. This time interval can then be used to determine a time interval for searching for a second local extremum. If this interval expires before locating a local extremum, then the knee is used as the amplitude value and the search for peaks terminates.

According to another aspect of the invention, the method for automatically adjusting the control parameters of the self-tuning controller may further include the step of sampling a user-selected process variable when a new disturbance response is detected. The user-selected process variable can be subdivided into subranges in which each subrange corresponds to a set of previously adapted control parameters. The subrange of the user-selected variable determines which set of stored controller parameters is most appropriate for the just detected disturbance. The sign of the initial error response can also be used to catalog and select among previous stored sets of controller parameters.

A lead-lag filter can also be provided to filter the set-point signal to prevent an excessive error overshoot in response to a set-point change when the controller is well tuned for a load upset. The lag is set equal to the controller integral time. The ratio of lead to lag can be adapted to achieve the desired overshoot target.

Brief Description of the Drawings

The foregoing and other objects, features, and advantages of the invention will be apparent from the following more particular description of the preferred embodiment of the invention, as illustrated in the accompanying drawings in which like reference characters refer to the same parts throughout the different views.

Fig. 1 is a block diagram of an adaptive process control system according to the present invention.

Fig. 2 is an error signal representing a closed-loop response of the adaptive process control system of Fig. 1.

Fig. 3 is a detailed block diagram of the adaptive process control system of Fig. 1.

Figs. 4-6 are flow diagrams indicating the operating states of the processor shown in Fig. 3.

Fig. 7 shows an error signal having a knee which indicates an overdamped response that has only one peak that can be located and confirmed.

Figs. 8 and 9 are flow diagrams indicating the operation of the processor for determining corrective control parameters for the process.

Figs. 10-12 are performance maps generated from experimental data for PI control of a pure delay process, an integral delay process and PID control of an integral delay process.

Detailed Description of the Application

The present invention uses performance feedback to update the parameters of a PID controller following each significant control error response to naturally occurring disturbances. Performance is measured using the pattern shape features of the error response, overshoot and decay ratio, which are independent of the amplitude and time scales. The pattern features of an isolated error response provide complete information for updating the control parameters when the response is oscillatory and decay is not equal to overshoot. Targets for the error response features are chosen so that the time scale of the response is optimized when the targets are realized by proper adjustment of the controller parameters such as proportional, integral time and derivative time. It should be noted that the derivative time to integral time ratio may be programmed using the knowledge of type of process to be regulated. The process type can be determined through interpolation or extrapolation of measured integral-time-to-period ratio data with similar data stored for known extreme process types such as pure delay and integral delay. Alternatively, the process type can be declared by the user or operator. Knowledge of the process type is not only used for programmed adaptation of the derivative time but is also used to improve the convergence rate of the proportional band and integral time through interpolation or extrapolation of data relating performance measures to tuning constants for specific process types.

For an oscillatory response, overshoot is calculated from the ratio of two successive peak heights. The decay ratio is the half period peak-to-peak ratio involving three successive peak heights. The derivative time can also be determined by performance feedback using a full period decay ratio involving a peak-to-peak ratio of four successive peaks. However, because this performance measure is very sensitive to noise, programmed adaptation for derivative time based on a measure of process type is preferred.

Furthermore, the present invention makes use of the recognition of a beginning of a response to choose the most appropriate set from stored sets of previously adapted PID tunings. At the end of the response, this set of stored sets of PID tunings is updated. The PID tunings are correlated with error response direction and/or with subranges of a user-specified variable.

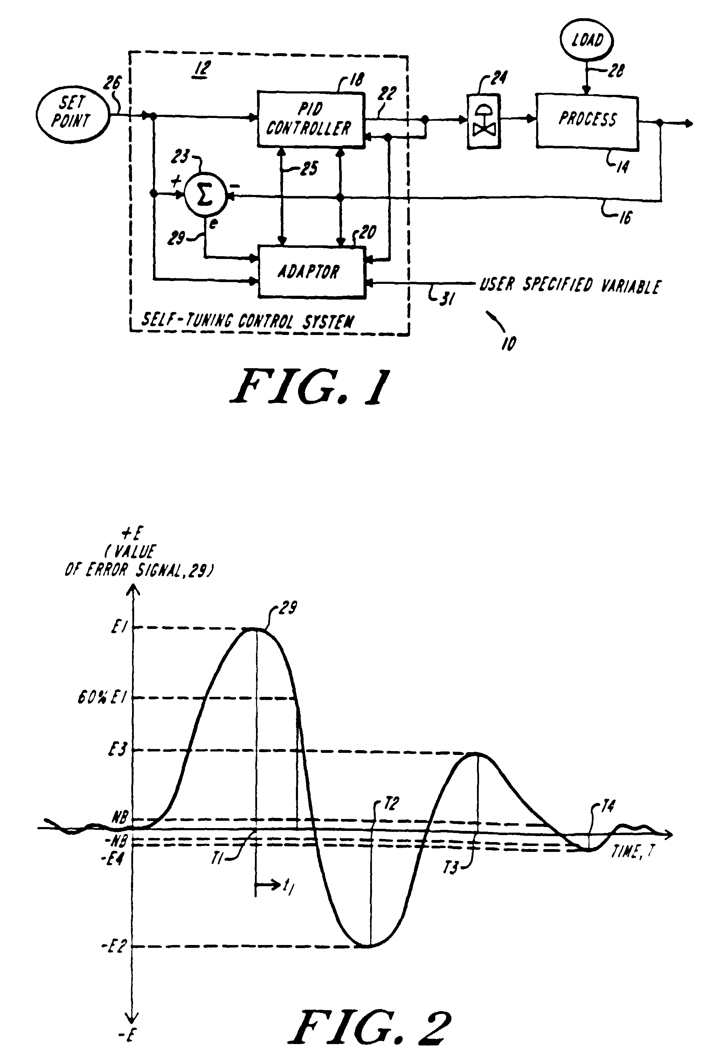

Referring now to Fig. 1, an adaptive process control system 10 includes a self-tuning control system 12 and a process 14 which is characterized by a controlled process variable 16, such as temperature, pressure, level, or concentration. Self-tuning control system 12 preferably consists of a PID controller 18 and an adaptor 20 for automatically adjusting or tuning the control parameters of the controller to optimize the closed-loop performance. Generally, tuning parameters 25 (discussed in greater detail below) are calculated using the values of process controlled variable 16 and a set point 26, the difference between these values (defined as an error signal 29 and produced by a summing amplifier 23), the controller output 22, and a user-specified variable 31. The control parameters are tuning "constants," which may include proportional band (P), integral time (I), derivative time (D) and the lead/lag ratio of a set-point compensator. Using some or all of these control parameters, controller 18 produces a control signal 22, which is received by a control element 24, such as a valve, for regulating process 14.

Process 14 responds to changes in control element 24 such that the value of controlled variable 16 becomes substantially equal to the desired value represented by set point 26 in the absence of load disturbances 28. Thus, the desired result is that process control system 10 be responsive to control error caused by changes in set point 26 or loads 28 on process 14. For example, if the magnitude of the load change is sufficiently large to cause the process 14 to make appreciable changes in the value of the process controlled variable 16, the controller 18, providing its parameters have been well tuned, will respond accordingly with corrective output 22 action to remove the effects of the disturbance. If the error response shape indicates sub-optimal disturbance rejection, the adaptor 20 updates the controller parameters to condition the controller for the next disturbance.

A general description of the adaptive process control system 10 according to the present invention can be best presented in terms of the behavior of error signal 29 as a function of time shown in Fig. 2. This error signal represents the closed-loop response of adaptive process control system 10 to an upset condition which causes a difference between set point 26 and the value of process controlled variable 16. The upset condition depicted is caused by a load disturbance 28 (such as a change in production rate) which significantly disturbs the value of the process controlled variable 16. However, as noted above, the upset could be caused by a sudden chenge in set point 26. The vertical axis of the plot indicates the measured value (E) of the error signal. The horizontal axis is time (T) with an arbitrary base value. In isolated oscillatory cases, the error signal 29 is characterized by as many as four peaks (also known as local extrema) having peak values El, E2, E3, and E4 which occur at times T1, T2, T3, and T4, respectively. Eventually, the integral action of controller 18 positions the valve 24 so that the measured value of the error signal becomes substantially equal to zero, which corresponds to the condition where the process controlled variable 16 has returned or changed to its desired value. A noise band (NB) whose value is the expected peak-to-peak variation of the error signal (PPNB) during quiet intervals between isolated upsets and is shown centered on the horizontal time axis. During operations of system 10, the noise band value is adapted as will be discussed below.

Using measured amplitudes of the error signal and times of their occurrence, the closed-loop response of adaptive process control system 10 can be characterized in terms of decay, overshoot, and time period, which are performance measures that are well known to control engineers for describing the behavior of the control loop. These performance measures together with the control parameters, P, I, and D, may then be used to determine the process type, such as a delay process, integral delay (dominant lag) process, or something in between. New control parameters are calculated for driving the decay and overshoot values to target values for that process. Specific details for measuring these performance values and for calculating the proper control parameters will be discussed below.

Referring now to Fig. 3, a more detailed block diagram of a preferred interacting digital type PID controller 18 is shown in terms of an equivalent analog controller element to aid in the explanation of the adaptive control. The PID controller 18 includes four filters: a proportional filter 30, an integral filter 32, a derivative filter 34, and a set-point filter 38. Proportional filter 30 is basically the inverse of the proportional band constant P and is used to determine the responsiveness of controller output 22 to error 29. Integral filter 32 receives an integral feedback input signal which may be the control signal 22 and generates a lagged positive feedback signal 33. Integral filter 32 is a first-order lag filter whose time constant is the integral time constant I. Derivative filter 34 is used in the measurement feedback loop as shown and operates as a lead-lag filter. Derivative filter 34 may include a second order lag term to attenuate high frequency measurement noise and thereby prevent unnecessary valve activity. The proportional, integral, and derivative terms in these filters are the control parameters determined and controlled, via lines 25a-c, by adaptor 20 and are discussed in greater detail below. In the preferred embodiment, controller 18 further includes a limiter 36 which is set to prevent the output 22 from exceeding the range of the control element 24.

During operation of system 10, set point 26 is preferably supplied to controller 18 via filter 38. This filter includes the integral time I, and a "constant" k as shown. As indicated by the phantom lines, filter 38 is not required in a regulator application; i.e., one with a constant set point. However, it is preferred in the present embodiment to prevent a set-point change from causing an excessive overshoot condition, particularly with a dominant lag process. Similar to the other tuning parameters in controller 18, these terms are initially determined by preset, pretuned, or default values and thereafter controlled by adaptor 20 via line 25d.

The output of filter 38 is thereafter combined, via a summing amplifier 40, with the output of derivative filter 34. The resulting signal is then multiplied by the inverse of the proportional constant P of proportional filter 30 and summed, via a summing amplifier 42, with the output of integral filter 32. The sum is then limited if necessary by filter 36 to produce control signal 22 for regulating valve 24. The output of integration filter 32 is a positive feedback signal that provides integral action on the control error when controller output 22 is between the limits of the limiter 36, but prevents integral windup when controller output 22 is at one of the limits. Adaptor 20 monitors controller output 22 to detect output limiting.

It should be clear to one skilled in the art that, instead of using the control signal 22 to directly control the valve, signal 22 could be used as a set point of a secondary controller (not shown). The controlled process variable of that secondary controller would then be fed to integral filter 32 as an external integral feedback signal. Similar to the adaptive process control system described above, the primary process measurement, or measured value, is made available to derivative filter 34 and to adaptor 20 as are the controller's output (or integral feedback) and set point.

A detailed block diagram of adaptor 20 is also shown in Fig. 3 and includes a processor 50 which receives and processes the controller output 22 (or integral feedback), controlled variable 16, set point 26, error signal 29, and the user-selected variable 31, in accordance with software stored in Read Only Memory (ROM) 52 to produce tuning parameters (P,I,D, and k). These parameters are subsequently applied to controller 18 via lines 25a-d. A Random Access Memory (RAM) 54 is provided to contain the data memory and registers required by the microprocessor for implementing the software operations in the ROM.

When processor 50 is first initialized, preset control parameters (which may be stored in RAM 54 or in memory, not shown, of controller 18) are transferred to processor 50. These tuning parameters may have been achieved using a pretuning feature similar to that described in the Kraus patent referenced above or may have been selected by an operator. Other settings are also fed to processor 50 and include a minimum, $W_{MIN}$, and maximum, $W_{MAX}$, wait times for establishing time windows for searching for peak values, an initial noise band NB term and target performance values which can similarly be selected by the operator. The minimum wait time $W_{MIN}$ is used in the confirmation of peaks, which will be discussed below. Typically this value is set to 2 or 3 times the sampling time of the adapter and prevents the system from picking out a peak caused by excessive derivative action. A more detailed discussion regarding these other settings is given below.

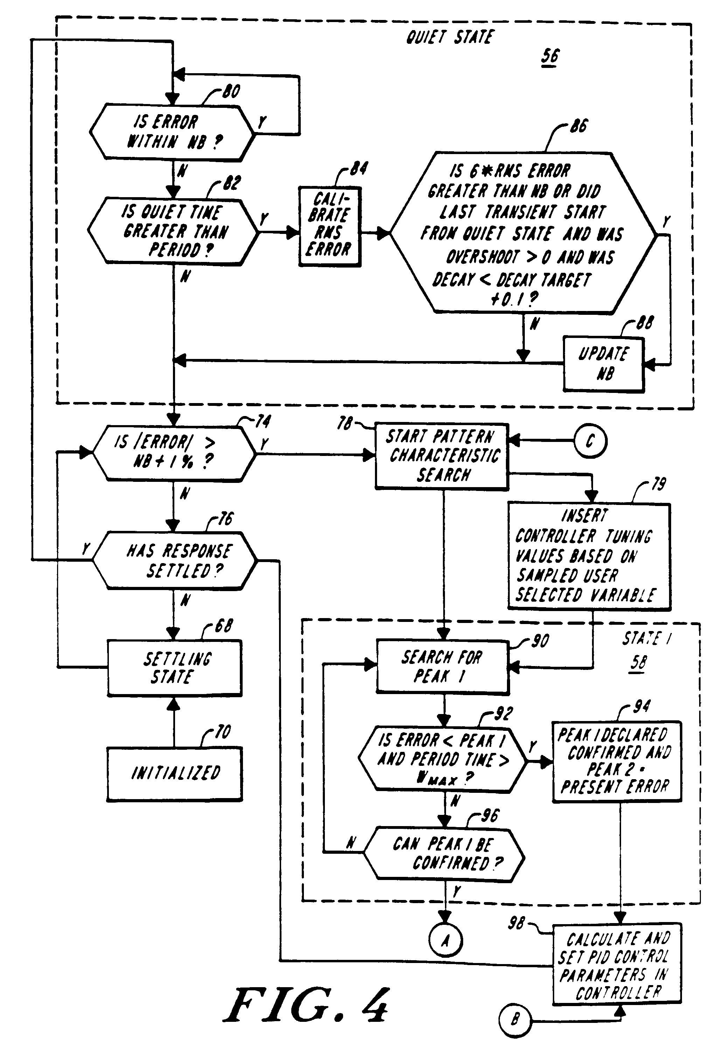

Referring now to the flow diagrams in Figs. 4-6, the operation of processor 50, after being initialized (Step 70), can generally be described in terms of six primary operating states. The primary operating states include a quiet state 56, four states (States 1-4) in which the processor searches for four consecutive peaks, 58, 60, 62, and 64, and a settling state 68.

<u>Quiet State and Settling State</u>

During quiet state 56 or settling state 68, the processor is looking for a new or continuing transient. If, during the settling state, the error signal remains within the noise band for an adequate time (a half or full period), the settling state 68 is terminated and the processor enters the quiet state 56, Steps 74 and 76.

The distinction between these states is that if the error signal 29 exceeds the noise band plus one percent of the full scale measurement while the processor was in the settling state, then the error signal is declared a continuing oscillation (or an overlapping response). An isolated disturbance is recognized if the response starts from the quiet state. Thereafter, processor 50 begins a search for pattern characteristics of the error signal 29, Step 78.

Referring to Fig. 2, the quiet and settling states are associated with the condition where the measured value of the error signal is between the upper and lower levels of the noise band. So long as the value of the error signal 29 remains between these levels, no new disturbance is recognized and no changes in the control parameters are made. If quiet state lasts at least one period following an adequately damped response, Step 82, the noise band is measured and updated, Steps 84, 86, and 88.

In previous self-adapting systems, the noise band was a fixed value selected by a user or measured during a pretuning phase as an open loop measurement. According to the present method, the noise band is measured under closed-loop conditions and is updated with changing process conditions. The user at any time can insert a value which will override and reinitialize this adapted value.

Updating the noise band requires that the quiet period extend for at least one natural period of the closed-loop as determined during the last upset, Steps 76, 80, and 82. At startup, the period timer is set equal to the maximum wait time, $W_{MAX}$, selected by the user or a pretune specified wait time. The noise band is updated if one of the two following criteria is satisfied:

1. The new noise band value is less than the previous noise band value; or
2.

    a) The previously determined overshoot value is greater than or equal to zero; and
    b) the error is not a continuing oscillation (that is the last observed oscillation started from a quiet condition); and
    c) the previous measured decay ratio is less than or equal to the decay ratio target plus 0.1.

Note that satisfying the second criterion permits the noise band to be updated to larger or smaller values. The new peak-to-peak noise band is calculated as the root-mean-square (RMS) value of the measured noise (that occurred during the quiet period) times an arbitrary factor, which is preferably set to six standard deviations, Steps 84, 86, and 88. These criteria are imposed to assure that the loop was neither overdamped nor too underdamped when the noise band is allowed to increase.

## Search for First Peak

Once the error signal 29 crosses a threshold related to the noise band, Step 74, the processor enters the first of four states for locating peaks or amplitudes which will be used as if they were peaks of the error signal. In the preferred embodiment, this threshold is set equal to the noise band plus one percent of the measurement range. The first state 58 includes initializing a period timer (a counter incremented with each new error sample), determining the sign of the error signal, and searching for the first peak of the error signal, Step 90. For convenience, if the sign of the error signal is initially negative, it is sign corrected such that the initial deviation from the noise band of the sign corrected error is positive. Further, when the error signal is first detected, the uncorrected error sign and the user-selected variable 31 are used to indicate the likely process operating condition for the new response. Based on the value of initial error sign and/or the selected variable, stored tuning values which best exploit past experience in coping with this process operating condition are inserted into the controller, Step 78.

An appropriate user-selected variable can include the set point 26 or a measured load 28 which anticipates the new final operating condition. For example, the set point can be used as the user-selected variable as an indicator of the future settled value of the process controlled variable. For example, if the nonlinear process behavior is most dependent on the value of the controlled measurement, the set point (which anticipates the controlled variable) should be selected. For another process, a measured load variable (or the controller output) may be a better choice. By selecting the most appropriate among successful past tunings, the system is better able to cope with process nonlinearity. This is a form of adaptive gain scheduling determined by performance feedback rather than open loop programming based on an identified or specified process model.

In the preferred embodiment, previous sets of adaptive tuning parameters, P, I, D and lead-lag ratio are stored and indexed according to the error response direction and magnitude values of the user-selected variable. The range of the user-selected variable may be subdivided and indexed into several subranges. For the preferred embodiment, the range of the selected specified variable is divided into three subranges, such that for each subrange there are two sets of tuning PID parameters (the set to be used depends on the initial sign of the error signal and the subrange of the user-selected variable). These tuning values are selected and updated to exploit and improve upon past experiences in coping with new disturbances. Of course this concept could be extended to multiple subranges of several variables. Further, it should be noted that the user may elect to select no variable. Then the selected set of tunings would depend on initial error sign alone. For example, the user would not select a variable if the process is linear.

The first peak, E1, is located by comparing the current magnitude of the measured error signal to a previously measured value, hereinafter referred to as a tentative first peak. If the current magnitude of the measured error signal is greater than the tentative first peak, then the value of the tentative first peak is replaced with the magnitude of the currently measured error signal and the period timer is reset to zero. This new tentative value is then compared with successively measured magnitudes of the error signal. This recursive step continues until the maximum wait time, $W_{MAX}$, expires or when the tentative first peak is confirmed as a bona fide peak. If time since the tentative first peak exceeds $W_{MAX}$ before the first peak is confirmed, then the tentative first peak is declared confirmed and the last measured error value is declared to be an unconfirmed second peak, E2, Steps 92 and 94. This criterion is used to stop the peak search when the controller has very sluggish tuning. Processor 50 then uses this incomplete information to make the PID tuning less sluggish, Step 98, as will be discussed below.

Before the peak timer reaches $W_{MAX}$, an attempt is made to confirm that the tentative peak is the first peak, EI, and not a noise artifact, Step 96. Table 1, set forth below, lists the preferred criteria for confirming peaks. These criteria are selected to reject local noise peaks and short-period peaks caused by excessive (mistuned) derivative action. Note that $t_{MIN}$ is the minimum value that the period timer $t_1$ may achieve after the first peak before starting information gathering for a particular peak. This "wait" time may be used to avoid detecting some of the high frequency oscillation peaks that may be the result of derivative action misapplied to a pure delay process. As indicated, if the difference between the tentative first peak and the current error exceeds the noise band and the current error is less than 0.6 times the tentative first peak, the first peak is confirmed. The method described above for locating and confirming the first peak will also be used in locating and confirming other peaks.

## Search for Second Peak

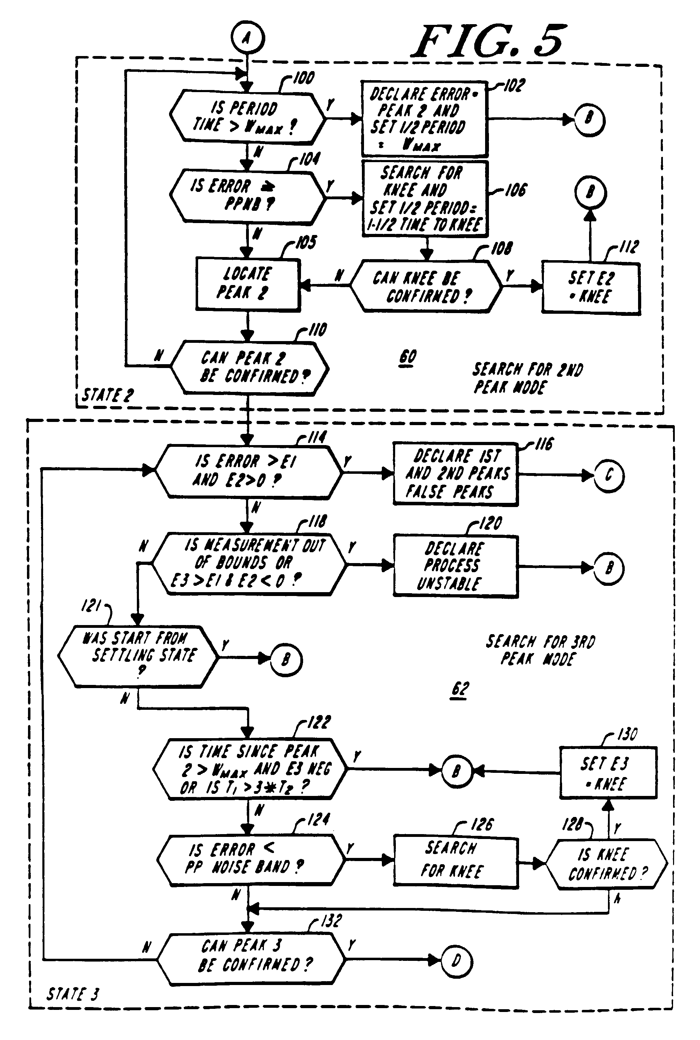

Assuming that the first peak has been located and confirmed, processor 50 enters state 2, generally indicated by Steps 100 to 112 (Fig. 5). Initially, the period timer, $t_1$ is set to zero at the first peak EI and is used for measuring the time since the first peak. If this timer exceeds $W_{MAX}$, the tentative second peak value will be used as the second peak E2 and the controller tuning is tightened to speed up this sluggish behavior, Steps 100 and 102. In this state, processor 50 is searching for an amplitude which may be a second peak E2 or a knee 114 in the error curve (as shown in Fig.

7), which may be used as if it were an unconfirmed second peak. A knee is a pattern feature of an overdamped response that has only one peak (EI).

A tentative knee is located at a point on a tangent 115 drawn through the error response 29 and a point having a 0.6 amplitude of the first peak EI at $t_1=0$. A tentative half period is chosen as 1.5 times the time from the first peak to the tentative knee, Step 106. A time interval equal to two times this tentative half period is used to search for and confirm the second peak. This maximum search time is independent of a previous response measurement or a preset wait time as disclosed in Kraus. Thus, a finite search time interval for locating the second peak is established even when a second peak exists. The tentative knee is abandoned if the error response 29 becomes less in magnitude than the negative noise band because a second peak can then be located. The tentative half period is then revised to be the time between the first peak and the tentative second peak. If, however, after two tentative half periods a second peak has not been confirmed, the search for peaks is terminated and the PID calculations are entered, Step 102. The knee is confirmed and used in the PID calculations as the unconfirmed second peak, if during the $W_{MAX}$ interval the amplitude difference between the currently measured error response 29 and a corresponding point on the tangent 115 equals the magnitude of the noise band, Steps 108 and 112.

TABLE 1

| TEST FOR PEAK CONFIRMATION | | |
|---|---|---|
| 1. | The currently measured error response is closer to zero than 0.6 * peak being compared. | |
| 2. | The currently measured error response is at least NB closer to zero than the peak being confirmed. | |
| 3. | Sufficient time since the last peak has elapsed for the start of confirmation of the following peaks: | |
| | a) | $t_{MIN} = 0$, for the first peak, E1; |
| | b) | $t_{MIN} = W_{MIN}$, for the second peak, E2; and |
| | c) | $t_{MIN}$ = twice the time interval between E1 and E2, for the third peak, E3. |

Search for Third Peak and Fourth Peak

When a second peak is confirmed, the search for a third amplitude, which again may be a peak or a knee, is begun (state 3). The same procedure used for locating the second peak, described above, is followed, except that the confirmed half period is not further revised. If, during the search, the third tentative peak exceeds the first peak and the second peak is also positive, the first two peaks are abandoned and the search for a first peak is again initiated, Steps 114 and 116. If the process controlled variable exceeds its range during the search for the third peak, the search is terminated and the violated range limit is used as the unconfirmed third peak estimate in the new PID calculations, Steps 118 and 120. Alternatively, if the tentative third peak is greater than the first, but the second peak is negative and the product of the first and third peak is not less that the square of the second peak, the response is considered unstable, Step 120, and the search for peaks terminated and new PID calculations based on this information entered. If, however, the response started from the settling state rather than the quiet state, indicating a continuing or overlapping response, the search for a third peak is terminated and PID tuning parameters calculated using this information are entered into the controller, Step 121.

Two half periods after the second peak are allowed to confirm the third peak. If it is not confirmed in this time, the search is terminated and appropriate PID calculations are entered. Providing time since the second peak does not exceed two half periods and error signal 29 remains negative, processor 50 searches for a knee in the same manner described above, Steps 122, 124, and 126, using the magnitude of the second peak. If the knee value can then be confirmed, it will be used as the unconfirmed third peak, Steps 128 and 130.

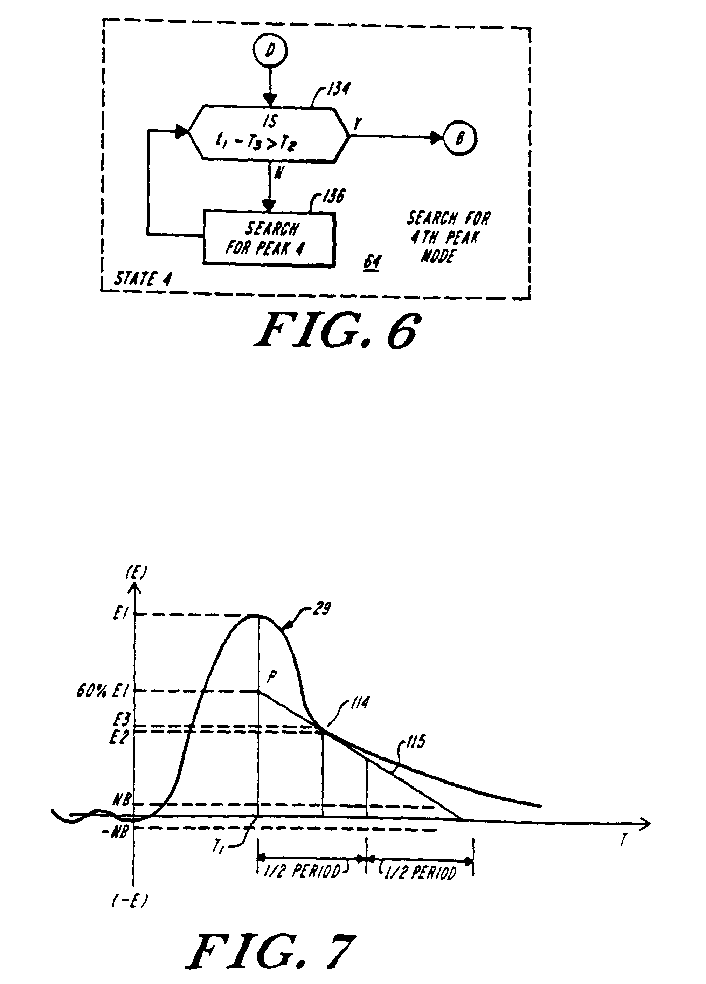

Providing the third peak is confirmed, a fourth peak will be sought in the same manner described above for a half period after the third peak, Steps 134 and 136 (state 4), Fig. 6.. In the preferred embodiment, if the tentative fourth peak value is less than the second peak value, confirmation of the third peak is withdrawn and new PID tunings are calculated based on this information, which indicates that the process is oscillating out of control. There is no attempt to confirm the fourth peak.

Calculation of New Control Parameters

Using the measured amplitudes, values for pattern features of the error signal can be determined and used to update the set of PID control parameters for the just-completed responses, Step 98 (Fig. 4). The half-period (T) and dimensionless pattern features which include overshoot (OVR) and decay are determined according to the equation set forth below.

$$(1) \qquad OVR = - E_{(2+N)}/E_{(1+N)}$$

$$(2) \qquad DECAY = \frac{E_{(3+N)} - E_{(2+N)}}{E_{(1+N)} - E_{(2+N)}}$$

$$(3) \qquad T = T_{(2+N)} - T_{(1+N)}$$

The variable N depends on the number of peaks that were located and skipped before selecting three successive amplitudes to calculate the above pattern features. Skipping peaks will be discussed in greater detail below. If the fourth peak E4 is lost in the noise band or a fifth peak is needed, a peak can be estimated according to the formula set forth below.

$$(4) \qquad E_{(3+N)} = \frac{E_{(1+N)} {}^{*} E_{(2+N)}}{E_{(N)}}$$

This equation is based on the assumption that the error signal is exhibiting a near optimal decay where the real parts of the three dominant closed-loop poles are identical.

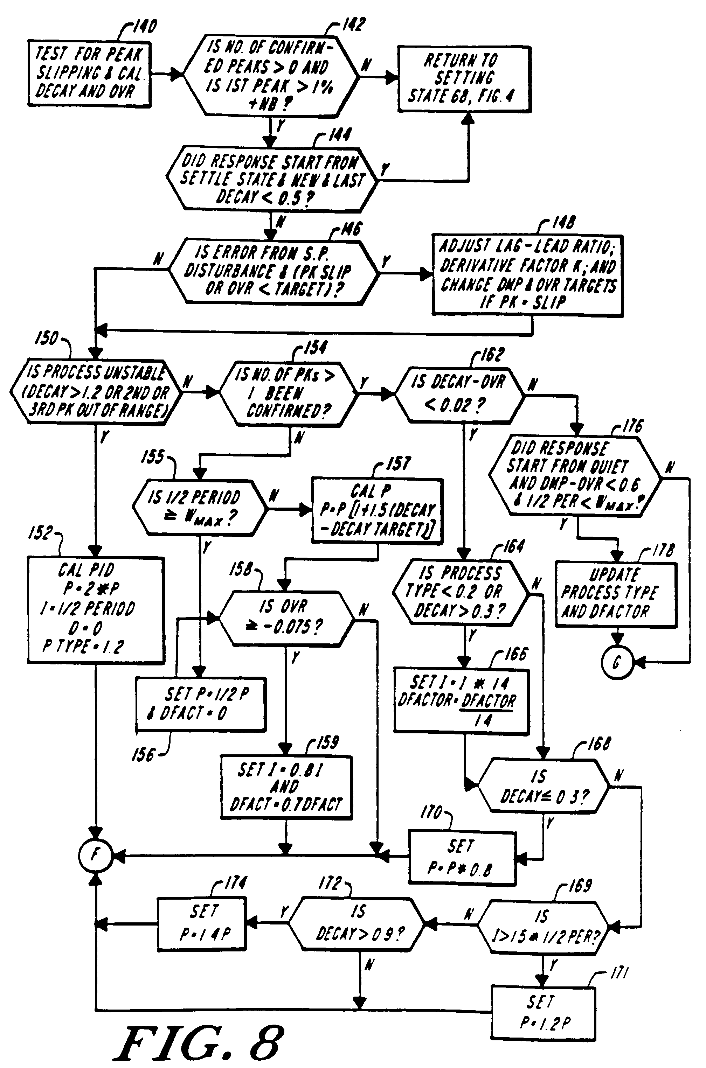

The set of successive peaks that will be used for updating the control parameters is determined by comparing the values of decay and overshoot based on the first set of three peaks located by processor 50 (N=0), Step 140, Fig. 8. If decay is less than overshoot, then processor 50 will "peak slip;" i.e., calculate new values for decay and overshoot, based on the next set of three peaks (N=1), and determine if a second peak slip (N=2) is necessary. In other words, peak slipping implies that the second peak will be declared the first peak, the third peak will be declared the second peak, and so on, for the purposes of selecting successive peaks that will be used to calculate new decay and overshoot values for determining corrective control parameters. More simply, if:

$$(5) \qquad E_{(1+N)} {}^{*} E_{(3+N)} < E_{(2+N)}{}^{2},$$

then there is a peak slip.

Once an N is found where the first product of equation 5 is larger than or equal to the second product, the first of the three successive peaks used may be tested to determine if it would trigger a peak search. It should be greater than one percent of the full-scale controlled variable plus the noise band in order to calculate the PID control parameters, Step 142. If this condition is not met, there is no PID update because the response is not large enough and the adaptor is switched to the settling state. However the set-point compensator factor k, may be adjusted, based on the overshoot prior to peak slipping, provided that the error response was initiated by a set-point disturbance. The set-point compensator factor k ranges from 0.2 for a dominant-lag process to 1.0 for a dominant delay process. This factor is decreased by the amount of overshoot which exceeds the target overshoot prior to peak slipping. This factor is increased following a sluggish isolated set-point response (negative overshoot) by an amount equal to the overshoot deviation. The decay and overshoot targets are also appropriately adjusted (temporarily) after a peak slip, but before P, I, and D are updated, Steps 144, 146 and 148. The adjustment is made so that there will be no change in the PID tuning if the process is disturbed either by an impulse requiring peak slipping or a step requiring no slipping.

At this point, overshoot, decay, and integral-to-half-period ratio of the error signal have been determined and can now be used to classify the PID adjustment process into categories based on the completeness of information that can be obtained from the error signal. A first category, generally indicated by Steps 150 and 152, deals with information in the following way. If the value of decay is greater than 1.2 or the second or third peak is beyond the measurement range, the control loop is recognized as grossly unstable, Step 150. For this case, the proportional term is doubled, the integral term is set equal to the half period, and the derivative term is set equal to zero, Step 152. The process type (ptype) is also set equal to 1.2.

A second category deals with information which indicates an overdamped response with only one confirmed peak and is generally indicated by Steps 154 to 159. If the half-period is greater than or equal to $W_{MAX}$, the proportional term is halved and the derivative factor is set to zero, Steps 155 and 156. Otherwise, the proportional term is updated according to the following recursive formula, Step 157.

(6)        P = P * (1+1.5(DECAY - DECAY TARGET))

Further, the integral time is multiplied by 0.8, if the overshoot is less than minus 0.075, Steps 158 and 159.

Note that for this case, the unconfirmed second peak E2 was either the knee 137 or the lowest value found during the search for the second peak E2. Further, since the third peak E3 cannot have an amplitude more than the peak-to-peak noise band (PPNB) above the unconfirmed second peak E2, decay is calculated based on this extreme case (provided decay does not exceed its target). This will cause the proportional band to be larger than it would have been had the decay been assumed zero in equation 6. As a result, the control is not overly tightened when the response is so small that the second and third peaks cannot be distinguished from noise.

A third category is generally indicated by Steps 162 to 174. This case occurs when the decay minus overshoot is less than 0.02, which indicates that the closed-loop response is close to being that of a damped quadratic, Step 162. The proportional and integral terms are calculated as follows. If the process type is less than 0.2, which is a measure that is between a pure delay and an integral delay (i.e.. close to a pure delay) as determined during an earlier adaptation or set by the user, or decay is greater than 0.3, the integral term is multiplied by 1.4, Steps 164 and 166. The determination of the process type will be discussed in greater detail below. The derivative factor, a factor applied to the integral term to determine the derivative time, is divided by 1.4 to keep the derivative time unchanged. If the decay is less than or equal to 0.3, then the proportional term is multiplied by 0.8, Steps 168 and 170. Otherwise, if the integral term is greater than one and one-half times the half period, the proportional term is multiplied by 1.2, Steps 169 and 171. If decay is greater than 0.9, then the proportional term is multiplied by 1.4, Steps 172 and 174; otherwise, the proportional term remains unchanged.

If the PID adjustment process has not already been categorized as having incomplete information, according to the three categories above, then the processor determines whether the response started from a quiet state, decay minus overshoot is less than 0.6, and the half period is less than $W_{MAX}$, Step 176. If these criteria are satisfied, then the process type is updated based on the new information judged to be complete, Step 178. The process type can change from 0.0 for a pure delay to 1.0 for an integral delay and even larger for a statically unstable process. According to the preferred embodiment, the process type, ptype, is determined from the following equation:

```
(7)  ln(I/T) = ptype*ln(I/T)integral
        measured        delay

                    +(1-ptype)*ln(I/T)delay.
```

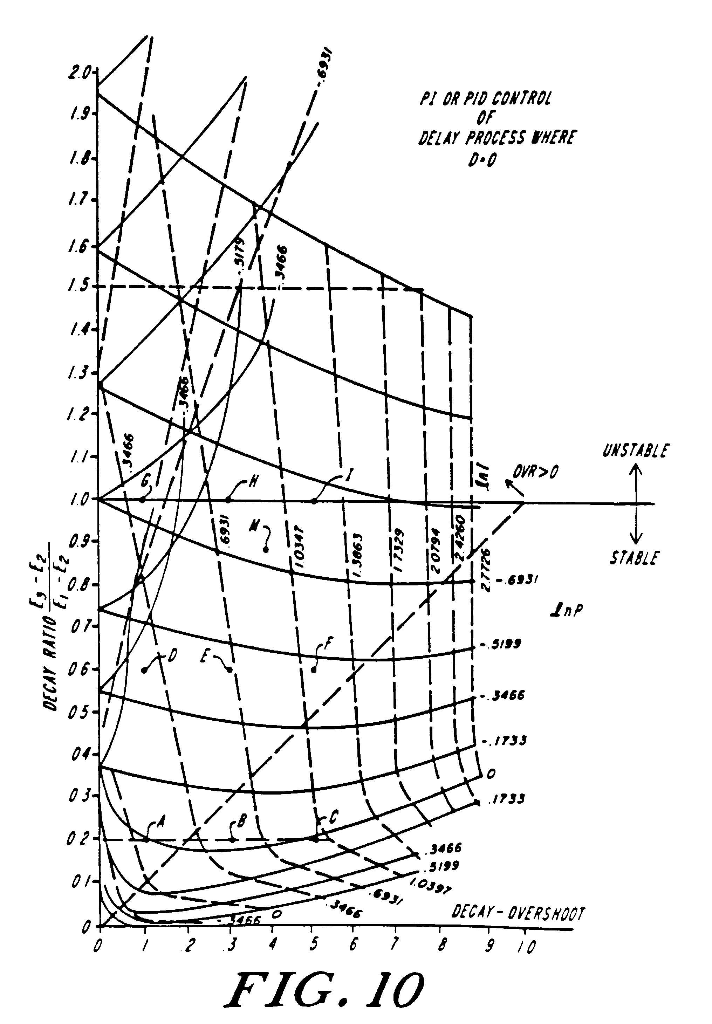

The ratio 1n(I/T) on the left hand side of the equation (7) is known because I is the current integral time controller value and T is the measured half-period. The ratios, 1n(I/T), on the right-hand side of equation (7) for the integral-delay and delay processes respectively, are interpolated from ratio values stored in ROM 52, Fig. 3. In the preferred embodiment, a total of 27 ratio values are stored for each of the three extreme process controller combinations shown in the plots of Figs. 10 through 12. These ratio values, include 1n(P/Po), 1n(I/Io), and 1n(I/T) at each of nine points labeled A-I, on the plots shown in Figs. 10 through 12 for PI and PID control of pure delay and integral-delay processes. (PI and PID control of pure delay process are combined in Fig. 10 since the optimal derivative term D is zero.) These ratios have been predetermined experimentally. The zero subscript refers to a reference point, A, arbitrarily selected to have 0.1 overshoot and 0.2 decay. The proportional band P, integral time I, and D/I ratio are values needed to achieve the measured decay and overshoot values. It should be noted that experimental data generated using other ratios conveying similar information can be used. Further, although these data points are evenly spaced in the decay and decay-minus-overshoot planes, other spacings as well as a different number of points can be selected for the purposes of interpolation or extrapolation.

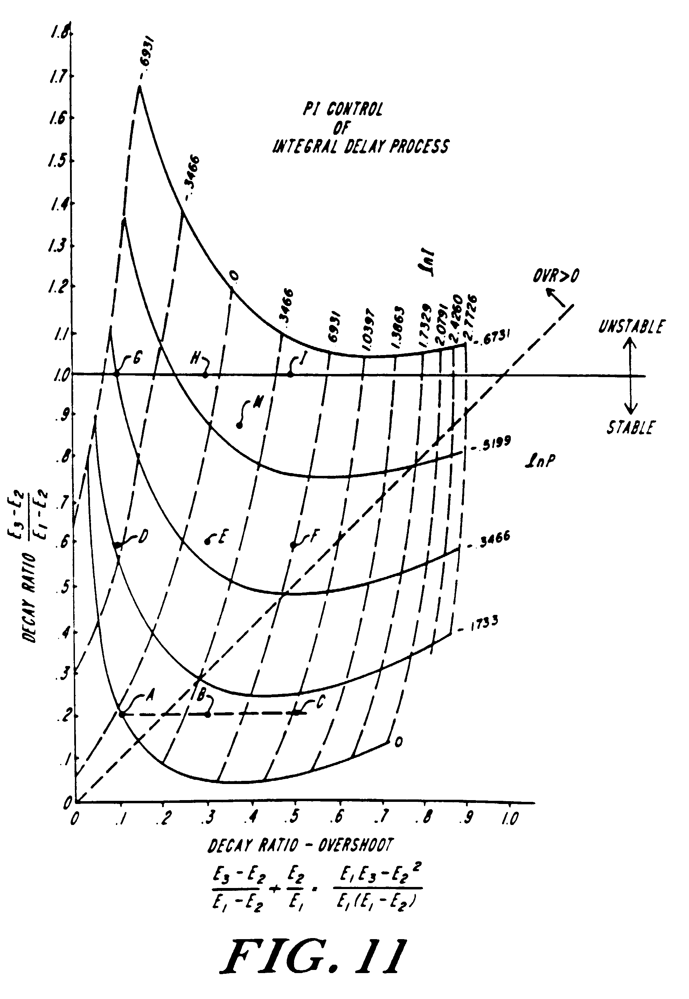

Using the measured decay and overshoot of the process, a point M, for example, can be plotted on the three graphs shown in Figs. 10 through 12. Using biquadratic interpolation, which is known to those skilled in the art, the weighting function associated with each of the stored data points is determined and used to find the set of ratios 1n $(P/P_o)$, 1n$(I/I_o)$ and 1n(I/T) for each process controller combination. Biquadratic interpolation was chosen because the curves generated by the experimental data resembled parabolas. If the controller is to have no derivative action, the stored data values of 1n(I/T) at the indicated points labeled A-J in Figs. 10 and 11 can be used to determine the process type (ptype) using equation (7) above.

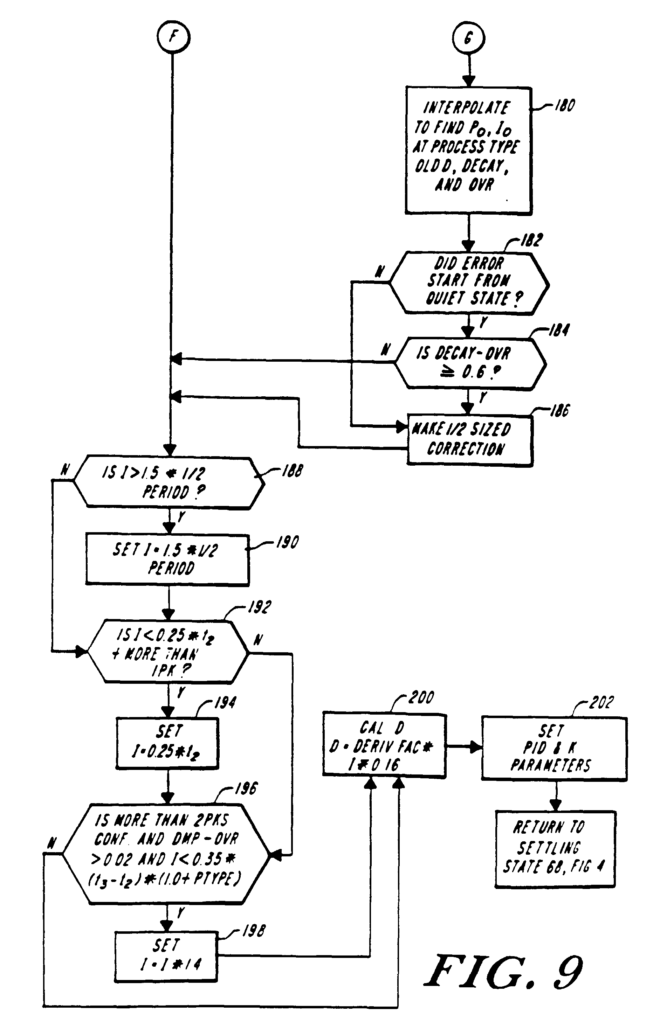

Knowing the current integral time, I, and proportional band, P, the process type, and the ratios 1n$(P/P_o)$ and 1n$(I/I_o)$ for both the integral-delay and delay process now permits the processor to calculate the proportional band, $P_o$, and integral time, $I_o$, necessary to move the current decay and overshoot values to the respective decay and overshoot values at the reference point A (0.1 overshoot and 0.2 decay). Note that the overshoot and decay values at reference point A is chosen as the preferred target values. These new parameter values are calculated by solving for $P_o$ and $I_o$ in the left-hand side of equations 8 and 9 respectively, Step 180, Fig. 9.

$$(8) \quad \ln(\frac{P}{P_O}) = ptype * \ln(\frac{P}{P_O})integral + (1-ptype) * \ln(\frac{P}{P_O})delay$$

$$(9) \quad \ln(\frac{I}{I_O}) = ptype * \ln(\frac{I}{I_O})integral + (1-ptype) * \ln(\frac{I}{I_O})delay$$

If the user selects target decay and overshoot values different from the reference values, the proportional band $P_T$ and integral time $I_T$ can be calculated according to the following with P and I of equations 8 and 9 replaced by $P_T$ and $I_T$. Then $P_o$ and $I_o$ can be eliminated as indicated by the following equations:

$$(10) \qquad \ln(\frac{P_T}{P_O}) - \ln(\frac{P}{P_O}) = \ln(\frac{P_T}{P}) = r_1 \; ;$$

$$(11) \qquad P_T = P \, e^{r_1} \; ;$$

$$(12) \qquad \ln(\frac{I_T}{I_O}) - \ln(\frac{I}{I_O}) = \ln(\frac{I_T}{I}) = r_2 \; ;$$

and

$$(13) \qquad I_T = I \, e^{r_2} \; ,$$

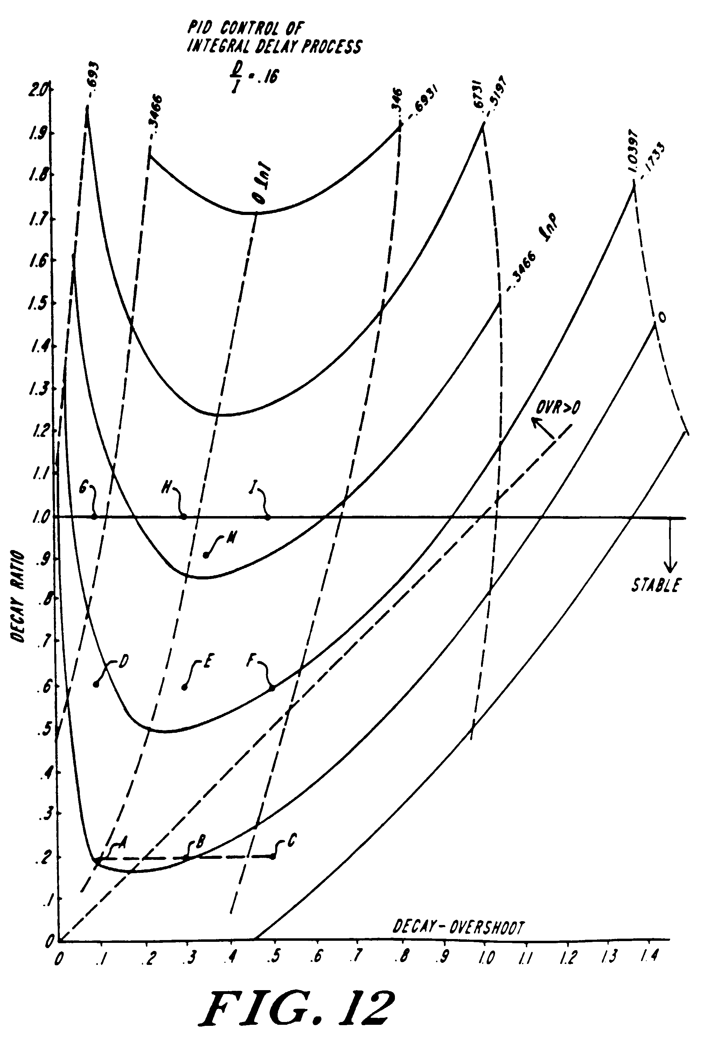

For the above calculations it was assumed that there was no derivative term D. If the controller is to have derivative action, it is first necessary to interpolate or extrapolate the data from Figs. 11 and 12 using a derivative factor (dfact), which will be explained shortly, in order to get values for:

$$\ln(\frac{P}{P_O})integral \; , \quad \ln(\frac{I}{I_O})integral, \quad and \quad \ln(\frac{I}{T})integral$$
$$\qquad\qquad\qquad delay \qquad\qquad\qquad delay \qquad\qquad\qquad delay$$

used in equations 7 through 9.

Using these interpolated ratio values the new control parameters that will move the measured damping and overshoot values to target values are calculated in a similar manner as above using the following equations. For measured conditions, dfact is the ratio of D to I.

$$(14) \quad \ln(\frac{I}{T}) \text{integral}_{\text{delay}} = \text{dfact} * \ln(\frac{I}{T}) \text{integral}_{\text{delay, PID}} +$$

$$(1-\text{dfact}) * \ln(\frac{I}{T}) \text{integral}_{\text{delay, PI}}$$

$$(15) \quad \ln(\frac{P}{P_O}) \text{integral}_{\text{delay}} = \text{dfact} * \ln(\frac{P}{P_O}) \text{integral}_{\text{delay, PID}} +$$

$$(1-\text{dfact}) * \ln(\frac{P}{P_O}) \text{integral}_{\text{delay, PI}} ;$$

$$(16) \quad \ln(\frac{I}{I_O}) \text{integral}_{\text{delay}} = \text{dfact} * \ln(\frac{I}{I_O}) \text{integral}_{\text{delay, PID}} +$$

$$(1-\text{dfact}) * \ln(\frac{I}{I_O}) \text{integral}_{\text{delay, PI}} ,$$

For target conditions, the new derivative factor, dfact, may be scheduled using an empirically determined relationship for D/I with ptype, Step 178. If ptype is less than 0.03 (a dominant delay process) the dfactor is permanently clamped to zero until the user overrides this decision; otherwise, if the overshoot is greater than zero:

$$(17) \qquad \text{dfact} = 2.2 - 1.25 * \text{ptype}$$

If both the measured decay and overshoot were equal to their target values, the interpolation method would indicate no change in proportional band or integral time, even though there may have been a change in the derivative factor. A correction is made based on the shift in reference value, $P_o$ and $I_o$, with and without derivative action in the controller for an integral-delay process. This correction is proportioned, based on the product of the dfact change and ptype.

If the error signal started from the settling state or decay minus overshoot is greater than 0.6, then the parameter changes are divided by 2, Steps 182, 184 and 186.

To recover quickly from a grossly mistuned condition, the integral time is adjusted to fall in an expected range relative to the half period. The criteria for determining this condition are set forth in Steps 188 to 198. If overshoot is greater than zero, the integral time is not allowed to exceed 1.5 times the half-period, Steps 187, 188, and 190. If at least one peak is confirmed, the integral time is forced to be at least 0.25 times the half-period, Steps 192 and 194. Also if three peaks have been confirmed, the response is not dominated by the quadratic term, and the integral time is less than 0.35 times (1.0 + ptype) times the time between peaks two and three. The integral time is multiplied by a factor of 1.4, Steps 196 and 198. These steps prevent the integral time from becoming too small when the disturbance is applied gradually. The derivative is thereafter calculated by multiplying the derivative factor times the integral value times 0.16, Step 200. However, the derivative time is not allowed to exceed 0.25 times the half-period. The control parameters are then updated in controller 18, Fig. 3, Step 202. The processor thereafter returns to the settling state 68, Fig. 4.

While the invention has been particularly shown and described with reference to a preferred embodiment thereof, it will be understood by those skilled in the art that various changes in form and details may be made therein. For example, a similar scheme can be applied to a non-interacting PID controller.

**Claims**

1. A method for automatically adjusting the control parameters of a self-tuning controller (12) used to regulate a process (14) having a measured process variable signal (16), comprising the steps of

generating an error response signal (29) representing a closed-loop response of the process to an upset condition,
locating and measuring amplitude values of said error response signal (29) and generating as a function of the measured amplitude values a decay signal representing the decay of the error response signal and an overshoot signal representing the overshoot of the error response signal to characterize pattern features of the error response signal,
selecting. as a function of the decay signal and the overshoot signal of the error response signal. a set of three successive amplitude values of the error response signal, to produce measured decay and overshoot characteristics such that said measured decay characteristic is greater than said measured overshoot charcteristic, to select amplitude values of a select process response, and
automatically adjusting at least one of the control parameters of the controller as a function of the process response to improve the difference between one of said measured characteristics and a target characteristics.

2. The method of claim 1, wherein the step of measuring amplitude values includes measuring amplitude values representative of local extrema of the error response signal.

3. The method of claim 1, wherein the step of measuring values of said error response signal includes measuring an error signal that represents the difference between the process variable signal and a set-point signal.

4. The method of claim 1, wherein the step of automatically adjusting the control parameters includes the further step of generating as a function of said decay signal and said overshoot signal a process type signal representative of the type of process being regulated and adjusting the control parameters as a function of the process type.

5. The method of claim 4, wherein the step of automatically adjusting the control parameters further includes the step of comparing measured data with interpolated data from at least two types of processes to determine the process type signal.

6. The method of claim 5, wherein the step of comparing includes comparing measured data with interpolated data that includes control parameters.

7. The method of claim 6, wherein the step of comparing includes comparing measured data with interpolated data that includes the controller parameters include proportional and integral time data.

8. The method of claim 4, wherein the step of automatically adjusting the control parameters includes the step of comparing measured data with interpolated data from at least two types of processes to determine as a function of said interpolated data and said process type signal, appropriate changes in the control parameters.

9. The method of claim 4, wherein the step of automatically adjusting the control parameters includes the step of comparing measured data with extrapolated data from at least two types of processes to determine as a function of said extrapolated data and said process type signal, appropriate changes in the control parameters.

10. The method of claim 1, wherein the step of locating and measuring amplitude values includes the step of locating and measuring at least four successive amplitude values of local extrema of said response signal.

11. The method of claim 1, wherein the step of locating and measuring the amplitude values includes the step of locating a knee of said response signal representing an amplitude of the response signal occurring later in time to a first local extremum, and determining the period between the first local extremum and said knee to determine a time scale of the response signal response.

12. The method of claim 11, wherein the first local extremum is selected as the first of three successive amplitude values and said time scale is used to determine a maximum wait period for locating a second amplitude.

13. The method of claim 12, wherein the step of selecting the amplitudes values includes the step of using said knee as one of said amplitudes values when said maximum wait period expires before locating a second local extremum.

14. The method of claim 11, wherein said time scale is used to calculate a maximum wait period for locating a third amplitude value.

15. The method of claim 10, wherein the step of locating and measuring the amplitude values includes the step of locating said knee later in time to a second local extremum.

16. The method of claim 1, further including the step of sampling a user-selected process variable before the step of locating and measuring amplitude values and selecting previously adapted control parameters, based on a sampled value of the user-selected process variable, from a previously stored set of control parameters to provide an improved tuning for the present process condition.

17. The method of claim 16, wherein the process variable range is subdivided into subranges in which each subrange corresponds to a set of previously adapted control parameters.

18. The method of claim 1, wherein the step of selecting three successive amplitude value includes the step of indicating the sign of the first amplitude value to determine whether it is positive or negative, and inverting the values of said three amplitude values if the sign of the first amplitude is negative.

19. The method of claim 1, further including the step of filtering said set-point signal with a lead-lag filter to prevent an excessive error overshoot in response to a set-point change when the controller is well tuned for a load upset.

20. The method of claim 19, further including the step of adaptively tuning a ratio of lead-to-lag of said lead-lag filter to achieve a target overshoot value.

21. The method of claim 1, further including the steps of generating an error noise signal as a function of the response signal representing the closed-loop response of the process and updating a noise band during a quiet state of the response signal as a function of the error noise signal.

22. The method of claim 1, further including the step of validating the measured amplitude values of local extrema.

23. The method of claim 1 wherein the step of selecting successive amplitude values includes the step of selecting three successive amplitude values of said local extrema (E1, E2, and E3) such that the square of the second extremum (E2) is less than or equal to the first extremum (E1) times the third extremum (E3).

24. A method for automatically adjusting the control parameters of a controller (12) used to regulate a process (14) having a measured process variable signal (16) to attain a response having selected target characteristics, comprising the steps of

generating an error response signal (29) representing a closed-loop response of the process to an upset condition,
generating as a function of the error response signal (29). characteristics of the error response signal including a decay signal representing the decay of the error response signal, an overshoot signal representing the overshoot of the error response signal and a period signal representing the period or the error response signal to characterize the response of the process,
selecting, as a function of the decay and the overshoot signal of the error response signal, at least three successive amplitude values, such that said decay is greater than said overshoot to select amplitude values representative of a select process response,
generating a process type signal representative of the type of process being regulated, as a function of the decay signal, the overshoot signal and interpolated data from at least two types of processes, and
automatically calculating at least one of the control parameters of the controller in response to said process type signal to adjust the controller to improve the difference between said determined characteristics and the target characteristics.

25. A method according to claim 24 wherein the step of calculating control parameters includes identifying an unstable process response and generating at least one control parameter as a function of the process type signal.

26. A method according to claim 24 wherein the step of calculating control parameters includes identifying an overdamped response and generating at least one control parameter as a function of the period signal.

27. A method according to claim 24 wherein the step of calculating control parameters includes identifying a response signal representative of a damped quadratic response and generating at least one control parameter as a function of the process-type signal.

28. A self-tuning control system (10) comprising

a controller (12) having control parameters for regulating a process (14) having a measured process variable signal (16),
means (23) for generating an error response signal (29) representing a closed-loop response of the process to an upset condition,
an adaptor (20) for automatically adjusting control parameters of the controller, said adaptor (20) including means (50) for measuring amplitude characterizing pattern features of said error response signal,
means (50) for selecting three successive amplitude values of said error response signal to produce measured decay and overshoot characteristics of said error response signal, wherein said measured decay characteristic is greater than said overshoot characteristic, and
means (50) for automatically adjusting at least one of the control parameters of the controller to improve the difference between one of said measured characteristics and a target characteristic.

29. A self-tuning control system according to claim 28 wherein said means for adjusting control parameters includes

means for generating, as a function of the measured characteristics, a process type signal representative of the type of process to be regulated, and
means for calculating at least one of the control parameters of the controller as a function of the process-type signal .

30. The self-tuning control system of claim 28 wherein the means for determining pattern characteristics includes means for determining an overshoot and decay ratio of said response signal.

31. The self-tuning control system of claim 28 wherein the error signal represents the difference between the process variable signal and a set-point signal.

32. The controller of claim 28, wherein said decay signal is a dimensionless quantity characterized by the equation

$$Decay = \frac{E_{(3+N)} - E_{(2+N)}}{E_{(1+N)} - E_{(2+N)}}$$

where E is the amplitude of the error associated with the selected peak and N is the number of peaks skipped before selecting the three successive amplitudes.

33. The controller of claim 28, wherein said overshoot signal is a dimensionless quantity characterized by the equation

$$Overshoot = - E_{(2+N)} / E_{(1+N)}$$

where E is the amplitude of the error associated with the selected peak and N is the number of peaks skipped before selecting the three successive amplitudes.

34. The method of claim 1, wherein a period signal is generated as a function of said error response signal, the period signal representing the period of the error response signal to characterize the response of the process.

**35.** The method of claim 1, wherein said decay signal is a dimensionless quantity characterized by the equation

$$\text{Decay} = \frac{E_{(3+N)} - E_{(2+N)}}{E_{(1+N)} - E_{(2+N)}}$$

where E is the amplitude of the error associated with the selected peak and N is the number of peaks skipped before selecting the three successive amplitudes.

**36.** The method of claim 1, wherein said overshoot signal is a dimensionless quantity characterized by the equation

$$\text{Overshoot} = - E_{(2+N)} / E_{(1+N)}$$

where E is the amplitude of the error associated with the selected peak and N is the number of peaks skipped before selecting the three successive amplitudes.

**37.** The method of claim 34, wherein said period signal is a time quantity characterized by the equation

$$T = T_{(2+N)} - T_{(1+N)}$$

where N is the number of peaks skipped before selecting the three successive amplitudes.

**Patentansprüche**

**1.** Verfahren zum automatischen Einstellen der Steuerparameter eines sich selbst einstellenden Reglers (12), der zum Regeln eines Prozesses (14) verwendet wird, der ein gemessenes Prozeßvariablensignal (16) umfaßt, mit den Schritten

Erzeugen eines Fehlerantwortsignals (29), das die bei geschlossener Regelschleife auftretende Antwort des Prozesses auf einen Störzustand repräsentiert,
Feststellen und Messen von Amplitudenwerten des Fehlerantwortsignals (29) und Erzeugen eines Abfallsignals, das den Abfall des Fehlerantwortsignals repräsentiert, und eines Überschwingsignals, das das Überschwingen des Fehlerantwortsignals repräsentiert, jeweils als Funktion der gemessenen Amplitudenwerte, um hierdurch Mustermerkmale des Fehlerantwortsignals zu charakterisieren,
Auswählen eines Satzes aus drei aufeinanderfolgenden Amplitudenwerten des Fehlerantwortsignals als Funktion des Abfallsignals und des Überschwingsignals des Fehlerantwortsignals, um hierdurch gemessene Abfall- und Überschwingcharakteristika derart zu erzeugen, daß die gemessene Abfallcharakteristik größer ist als die gemessene Überschwingcharakteristik, um hierdurch Amplitudenwerte einer ausgewählten Prozeßantwort bzw. einer Antwort eines ausgewählten Prozesses auszuwählen, und
automatisches Einstellen mindestens eines der Steuerparameter des Reglers als Funktion der Prozeßantwort, um hierdurch den Unterschied zwischen einem der gemessenen Charakteristika und einer Sollcharakteristik zu verbessern.

**2.** Verfahren nach Anspruch 1, bei dem der Schritt der Messung von Amplitudenwerten das Messen von Amplitudenwerten enthält, die für lokale Extremwerte des Fehlerantwortsignals repräsentativ sind.

**3.** Verfahren nach Anspruch 1, bei dem der Schritt des Messens von Werten des Fehlerantwortsignals das Messen eines Fehlersignals enthält, das den Unterschied zwischen dem Prozeßvariablensignal und einem Sollpunktsignal repräsentiert.

**4.** Verfahren nach Anspruch 1, bei dem der Schritt des automatischen Einstellens der Steuerparameter den weiteren Schritt der Erzeugung eines Prozeßtyp-Signals, das den Typ des geregelten Prozesses repräsentiert, in Abhängigkeit von dem Abfallsignal und dem Überschwingsignal, und den Schritt der Einstellung der Steuerparameter in Abhängigkeit von dem Prozeßtyp enthält.

**5.** Verfahren nach Anspruch 4, bei dem der Schritt der automatischen Einstellung der Steuerparameter den Schritt des Vergleichens von gemessenen Daten von von mindestens zwei Typen von Prozessen stammenden interpolierten Daten enthält, um hierdurch das Prozeßtyp-Signal festzulegen.

**6.** Verfahren nach Anspruch 5, bei dem der Schritt des Vergleichens das Vergleichen von gemessenen Daten mit interpolierten Daten, die Steuerparameter enthalten, aufweist.

**7.** Verfahren nach Anspruch 6, bei dem der Schritt des Vergleichens das Vergleichen von gemessenen Daten mit interpolierten Daten aufweist, die die Steuerparameter einschließlich proportionaler und integraler Zeitdaten enthalten.

**8.** Verfahren nach Anspruch 4, bei dem der Schritt des automatischen Einstellens der Steuerparameter den Schritt des Vergleichens von gemessenen Daten mit interpolierten Daten von mindestens zwei Typen von Prozessen enthält, um hierdurch geeignete Änderungen in den Steuerparametern in Abhängigkeit von den interpolierten Daten und dem Prozeßtyp-Signal zu bestimmen.

**9.** Verfahren nach Anspruch 4, bei dem der Schritt des automatischen Einstellens der Steuerparameter den Schritt des Vergleichens von gemessenen Daten mit extrapolierten Daten von mindestens zwei Typen von Prozessen enthält, um hierdurch geeignete Änderungen in den Steuerparametern in Abhängigkeit von den extrapolierten Daten und dem Prozeßtyp-Signal zu bestimmen.

**10.** Verfahren nach Anspruch 1, bei dem der Schritt der Ermittlung und Messung von Amplitudenwerten den Schritt der Ermittlung und Messung von mindestens vier aufeinanderfolgenden Amplitudenwerten von lokalen Extremwerten des Antwortsignals enthält.

**11.** Verfahren nach Anspruch 1, bei dem der Schritt der Ermittlung und Messung der Amplitudenwerte den Schritt der Ermittlung eines knieförmigen Verlaufs bzw. einer Biegung des Antwortsignals, die eine zeitlich später als ein erster lokaler Extremwert auftretende Amplitude des Antwortsignals repräsentiert, und der Ermittlung der Zeitdauer zwischen dem ersten lokalen Extremwert und der Biegung zur Bestimmung einer Zeitskala der Antwort des Antwortsignals enthält.

**12.** Verfahren nach Anspruch 11, bei dem der erste lokale Extremwert als der erste von drei aufeinanderfolgenden Amplitudenwerten ausgewählt wird und bei dem die Zeitskala zur Ermittlung einer maximalen Warteperiode für die Ermittlung einer zweiten Amplitude eingesetzt wird.

**13.** Verfahren nach Anspruch 12, bei dem der Schritt der Auswahl der Amplitudenwerte den Schritt der Verwendung der Biegung als einen der Amplitudenwerte dann, wenn die maximale Warteperiode vor der Ermittlung eines zweiten lokalen Extremwerts abläuft, enthält.

**14.** Verfahren nach Anspruch 11, bei dem die Zeitskala zur Berechnung einer maximalen Warteperiode für die Ermittlung eines dritten Amplitudenwerts herangezogen wird.

**15.** Verfahren nach Anspruch 10, bei dem der Schritt der Ermittlung und Messung der Amplitudenwerte den Schritt der Ermittlung des knieförmigen Verlaufs in einer zeitlich später als der zweite lokale Extremwert liegenden Lage enthält.

**16.** Verfahren nach Anspruch 1, das weiterhin den Schritt der Abtastung einer benutzergewählten Prozeßvariablen vor dem Schritt der Ermittlung und Messung von Amplitudenwerten, und der Auswahl von zuvor angepaßten Steuerparametern aus einem zuvor gespeicherten Satz von Steuerparametern auf der Grundlage eines abgetasteten Werts der benutzergewählten Prozeßvariablen enthält, um hierdurch eine verbesserte Abstimmung hinsichtlich der aktuellen Prozeßbedingung zu erzielen.

**17.** Verfahren nach Anspruch 16, bei dem der Bereich der Prozeßvariablen in Unterbereiche unterteilt ist, wobei jeder Unterbereich einem Satz von zuvor angepaßten Steuerparametern entspricht.

**18.** Verfahren nach Anspruch 1, bei dem der Schritt der Auswahl von drei aufeinanderfolgenden Amplitudenwerten den Schritt der Angabe des Vorzeichens des ersten Amplitudenwerts für die Ermittlung, ob er positiv oder negativ ist, und des Invertierens der Werte der drei Amplitudenwerte dann, wenn das Vorzeichen der ersten Amplitude negativ ist, enthält.

19. Verfahren nach Anspruch 1, das weiterhin den Schritt des Filterns des Sollpunktsignals mittels eines Voreilungs-Nacheilungsfilters (Duofilters) enthält, um hierdurch ein übermäßiges Fehlerüberschwingen als Reaktion auf eine Sollpunktänderung zu verhindern, wenn der Regler gut auf eine Laststörung abgestimmt ist.

20. Verfahren nach Anspruch 19, das weiterhin den Schritt des adaptiven Einstellens eines Verhältnisses zwischen Voreilung und Nacheilung des Duofilters zur Erzielung eines Soll-Überschwingwerts enthält.

21. Verfahren nach Anspruch 1, das weiterhin die Schritte der Erzeugung eines Fehlerstörungssignals als eine Funktion des Antwortsignals, das die bei geschlossener Regelschleife auftretende Antwort des Prozesses repräsentiert, und der Aktualisierung eines Störungsbands während eines Ruhezustands des Antwortsignals als Funktion des Fehlerstörungssignals enthält.

22. Verfahren nach Anspruch 1, das weiterhin den Schritt der Bestätigung der gemessenen Amplitudenwerte von lokalen Extremwerten enthält.

23. Verfahren nach Anspruch 1, bei dem der Schritt der Auswahl von aufeinanderfolgenden Amplitudenwerten den Schritt der Auswahl von drei aufeinanderfolgenden Amplitudenwerten von lokalen Extremwerten (E1, E2 und E3) derart enthält, daß das Quadrat des zweiten Extremwerts (E2) kleiner als oder gleich groß ist wie der erste, mit dem dritten Extremwert (E3) multiplizierte Extremwert (E1).

24. Verfahren zum automatischen Einstellen der Steuerparameter eines Reglers (12), der zum Regeln eines Prozesses (14) verwendet wird, der ein gemessenes Prozeßvariablensignals (16) erzeugt, um hierdurch eine Antwort mit ausgewählten Solleigenschaften zu erzielen, mit den Schritten

Erzeugen eines Fehlerantwortsignals (29), das eine bei geschlossener Regelschleife auftretende Antwort des Prozesses auf eine Störbedingung repräsentiert,
Erzeugen von Charakteristika des Fehlerantwortsignals einschließlich eines Abfallsignals, das den Abfall des Fehlerantwortsignals repräsentiert, eines Überschwingsignals, das das Überschwingen des Fehlerantwortsignals repräsentiert, und eines Periodensignals, das die Periode des Fehlerantwortsignals repräsentiert, als Funktion des Fehlerantwortsignals (29), um hierdurch die Antwort des Prozesses zu charakterisieren,
Auswählen von mindestens drei aufeinanderfolgenden Amplitudenwerten, in Abhängigkeit von dem Abfallsignal und dem Überschwingsignals des Fehlerantwortsignals derart, daß der Abfall größer ist als das Überschwingen, um hierdurch Amplitudenwerten auszuwählen, die für eine ausgewählte Prozeßantwort repräsentativ sind,
Erzeugen eines Prozeßtyp-Signals, das für den Typ des geregelten Prozesses repräsentativ ist, in Abhängigkeit von dem Abfallsignal, dem Überschwingsignal und interpolierten Daten von mindestens zwei Prozeßtypen, und
automatisches Berechnen von mindestens einem der Steuerparameter des Reglers als Reaktion auf das Prozeßtyp-Signal, um hierdurch den Regler hinsichtlich einer Verbesserung der Differenz zwischen der ermittelten Charakteristik und der Sollcharakteristik einzustellen.

25. Verfahren nach Anspruch 24, bei dem der Schritt der Berechnung von Steuerparametern das Identifizieren einer instabilen Prozeßantwort und das Erzeugen von mindestens einem Steuerparameter in Abhängigkeit von dem Prozeßtyp-Signal enthält.

26. Verfahren nach Anspruch 24, bei dem der Schritt der Berechnung der Steuerparameter das Identifizieren einer übermäßig stark gedämpften Antwort und das Erzeugen von mindestens einem Steuerparameter als Funktion des Periodensignals enthält.

27. Verfahren nach Anspruch 24, bei dem der Schritt der Berechnung von Steuerparametern das Identifizieren eines Antwortsignals, das eine gedämpfte, quadratische Antwort repräsentiert, und das Erzeugen von mindestens einem Steuerparameter in Abhängigkeit von dem Prozeßtyp-Signal enthält.

28. Selbstabstimmendes Steuersystem (10), mit

einem Regler (12), der Steuerparameter zum Regeln eines Prozesses (14) aufweist, der ein gemessenes Prozeßvariablensignal (16) enthält,

einer Einrichtung (23) zum Erzeugen eines Fehlerantwortsignals (29), das eine bei geschlossener Regelschleife auftretende Antwort des Prozesses auf eine Störbedingung repräsentiert,

einer Anpassungseinrichtung (20) zum automatischen Einstellen von Steuerparametern des Reglers, wobei die Anpassungseinrichtung (20) enthält:

eine Einrichtung (50) zum Messen von die Amplitude charakterisierenden Mustermerkmalen des Fehlerantwortsignals,

eine Einrichtung (50) zum Auswählen von drei aufeinanderfolgenden Amplitudenwerten des Fehlerantwortsignals, um hierdurch gemessene Abfall- und Überschwingcharakteristika des Fehlerantwortsignals zu erzeugen, wobei die gemessene Abfallcharakteristik größer ist als die Überschwingcharakteristik und

eine Einrichtung (50) zum automatischen Einstellen von mindestens einem der Steuerparameter des Reglers, um hierdurch die Differenz zwischen einer gemessenen Charakteristika und einer Sollcharakteristik zu verbessern.

29. Selbstabstimmendes Steuersystem nach Anspruch 28, bei dem die Einrichtung zum Einstellen von Steuerparametern enthält:

eine Einrichtung zum Erzeugen eines Prozeßtyp-Signals in Abhängigkeit von den gemessenen Charakteristika, wobei das Prozeßtyp-Signal den Typ des geregelten Prozesses repräsentiert, und

eine Einrichtung zum Berechnen von mindestens einem der Steuerparameter des Reglers in Abhängigkeit von dem Prozeßtyp-Signal.

30. Selbstabstimmendes Steuersystem nach Anspruch 28, bei dem die Einrichtung zum Bestimmen von Mustercharakteristika eine Einrichtung zum Ermitteln eines Überschwing- und Abfallverhältnisses des Antwortsignals enthält.

31. Selbstabstimmendes Steuersystem nach Anspruch 28, bei dem das Fehlersignal die Differenz zwischen dem Prozeßvariablensignal und einem Sollpunktsignal repräsentiert.

32. Regler nach Anspruch 28, bei dem das Abfallsignal eine dimensionslose Größe ist, die durch die Gleichung charakterisiert ist:

$$\text{Abfall} = \frac{E_{(3+N)} - E_{(2+N)}}{E_{(1+N)} - E_{(2+N)}} \ ,$$

wobei E die Amplitude des mit einem ausgewählten Spitzenwert verknüpften Fehlers bezeichnet und N die Anzahl von Spitzenwerten repräsentiert, die übersprungen wurden, bevor die drei aufeinanderfolgenden Amplituden ausgewählt wurden.

33. Regler nach Anspruch 28, bei dem das Überschwingsignal eine dimensionslose Größe ist, die durch die Gleichung charakterisiert ist:

$$\text{Überschwingen} = - E_{(2+N)} \ / \ E_{(1+N)},$$

wobei E die Amplitude des mit dem ausgewählten Spitzenwert verknüpften Fehlers bezeichnet und N die Anzahl von Spitzenwerten repräsentiert, die vor der Auswahl der drei aufeinanderfolgenden Amplituden übersprungen wurden.

34. Verfahren nach Anspruch 1, bei dem ein Periodensignal in Abhängigkeit von dem Fehlerantwortsignal erzeugt wird, wobei das Periodensignal die Periode des Fehlerantwortsignals zur Charakterisierung der Antwort des Prozesses repräsentiert.

35. Verfahren nach Anspruch 1, bei dem das Abfallsignal eine dimensionslose Größe ist, die durch die Gleichung repräsentiert ist:

$$\text{Abfall} = \frac{E_{(3+N)} - E_{(2+N)}}{E_{(1+N)} - E_{(2+N)}} \ ,$$

wobei E die Amplitude des mit einem ausgewählten Spitzenwert verknüpften Fehlers bezeichnet und N die Anzahl von Spitzenwerten repräsentiert, die übersprungen wurden, bevor die drei aufeinanderfolgenden Amplituden ausgewählt wurden.

36. Verfahren nach Anspruch 1, bei dem das Überschwingsignal eine dimensionslose Größe ist, die durch die Gleichung charakterisiert ist:

$$\text{Überschwingen} = - E_{(2+N)} / E_{(1+N)},$$

wobei E die Amplitude des mit dem ausgewählten Spitzenwert verknüpften Fehlers bezeichnet und N die Anzahl von Spitzenwerten repräsentiert, die vor der Auswahl der drei aufeinanderfolgenden Amplituden übersprungen wurden.

37. Verfahren nach Anspruch 34, bei dem das Periodensignal eine Zeitgröße ist, die durch die Gleichung charakterisiert ist:

$$T = T_{(2+N)} - T_{(1+N)},$$

wobei N die Anzahl von Spitzenwerten bezeichnet, die vor der Auswahl der drei aufeinanderfolgenden Amplituden übersprungen wurden.

## Revendications

1. Procédé pour ajuster automatiquement les paramètres de commande d'une unité de commande (12) à accord automatique utilisée pour réguler un processus (14) comprenant un signal mesuré pour une variable du processus (16), comprenant les étapes consistant à :

   - engendrer un signal de réponse d'erreur (29) représentant une réponse en boucle fermée du processus jusqu'à une condition de renversement ;
   - situer et mesurer des valeurs d'amplitude dudit signal de réponse d'erreur (29) et engendrer en fonction des valeurs d'amplitude mesurées un signal d'évanouissement représentant l'évanouissement du signal de réponse d'erreur, et un signal de dépassement qui représente le dépassement du signal de réponse d'erreur afin de caractériser des éléments du motif du signal de réponse d'erreur ;
   - choisir, en fonction du signal d'évanouissement et du signal de dépassement du signal de réponse d'erreur, un groupe de trois valeurs d'amplitude successives du signal de réponse d'erreur, pour produire des caractéristiques mesurées de l'évanouissement et du dépassement telles que ladite caractéristique mesurée de l'évanouissement est supérieure à ladite caractéristique mesurée du dépassement, pour choisir des valeurs d'amplitude d'une réponse choisie quant au processus ; et
   - ajuster automatiquement l'un au moins des paramètres de commande de l'unité de commande en fonction de la réponse du processus pour améliorer la différence entre l'une desdites caractéristiques mesurées et une caractéristique cible.

2. Procédé selon la revendication 1, dans lequel l'étape consistant à mesurer les valeurs d'amplitude inclut la mesure de valeurs d'amplitude représentatives de valeurs extrêmes locales du signal de réponse d'erreur.

3. Procédé selon la revendication 1, dans lequel l'étape consistant à mesurer des valeurs dudit signal de réponse d'erreur inclut la mesure d'un signal d'erreur qui représente la différence entre le signal de la variable du processus et un signal d'un point fixé.

4. Procédé selon la revendication 1, dans lequel l'étape consistant à ajuster automatiquement les paramètres de commande inclut l'étape supplémentaire consistant à engendrer, en fonction dudit signal d'évanouissement et dudit signal de dépassement, un signal type pour le processus, représentant le type du processus que l'on régule, et à ajuster les paramètres de commande en fonction du type de processus.

5. Procédé selon la revendication 4, dans lequel l'étape consistant à ajuster automatiquement les paramètres de commande inclut en outre l'étape consistant à comparer des données mesurées avec des données interpolées provenant d'au moins deux types de processus afin de déterminer le signal quant au type du processus.

6. Procédé selon la revendication 5, dans lequel l'étape consistant à comparer inclut la comparaison de données mesurées avec des données interpolées qui incluent des paramètres de commande.

7. Procédé selon la revendication 6, dans lequel l'étape qui consiste à comparer en incluant la comparaison de données mesurées avec des données interpolées qui incluent les paramètres de l'unité de commande inclut des données proportionnelles et intégrées vis-à-vis du temps.

8. Procédé selon la revendication 4, dans lequel l'étape consistant à ajuster automatiquement les paramètres de commande inclut l'étape consistant à comparer des données mesurées avec des données interpolées provenant d'au moins deux types de processus pour déterminer, en fonction desdites données interpolées et dudit signal quant au type du processus, des changements appropriés dans les paramètres de commande.

9. Procédé selon la revendication 4, dans lequel l'étape consistant à ajuster automatiquement les paramètres de commande inclut l'étape consistant à comparer des données mesurées avec des données extrapolées provenant d'au moins deux types de processus pour déterminer, en fonction desdites données extrapolées et dudit signal quant au type du processus, des changements appropriés dans les paramètres de commande.

10. Procédé selon la revendication 1, dans lequel l'étape consistant à situer et à mesurer des valeurs d'amplitude inclut l'étape consistant à situer et à mesurer au moins quatre valeurs d'amplitude successives de valeurs extrêmes locales dudit signal de réponse.

11. Procédé selon la revendication 1, dans lequel l'étape consistant à situer et à mesurer les valeurs d'amplitude inclut l'étape consistant à situer un coude dudit signal de réponse représentant une amplitude du signal de réponse qui se produit plus tard dans le temps à une première valeur extrême locale, et à déterminer la période entre la première valeur extrême locale et ledit coude pour déterminer une échelle temporelle du signal de réponse.

12. Procédé selon la revendication 11, dans lequel la première valeur extrême locale est choisie comme étant la première de trois valeurs d'amplitude successives, et ladite échelle temporelle est utilisée pour déterminer une période d'attente maximum pour situer une seconde amplitude.

13. Procédé selon la revendication 12, dans lequel l'étape consistant à choisir les valeurs d'amplitude inclut l'étape consistant à utiliser ledit coude comme étant l'une desdites valeurs d'amplitude lorsque ladite période d'attente maximum expire avant d'avoir situé une seconde valeur extrême locale.

14. Procédé selon la revendication 11, dans lequel ladite échelle temporelle est utilisée pour calculer une période d'attente maximum pour situer une troisième valeur d'amplitude.

15. Procédé selon la revendication 10, dans lequel l'étape consistant à situer et à mesurer les valeurs d'amplitude inclut l'étape consistant à situer ledit coude à un temps postérieur à une seconde valeur extrême locale.

16. Procédé selon la revendication 1, qui inclut en outre l'étape consistant à échantillonner une variable choisie par l'utilisateur dans le processus, avant l'étape consistant à situer et à mesurer des valeurs d'amplitude et à choisir des paramètres de commande précédemment adaptés, en se basant sur une valeur échantillonnée de la variable choisie par l'utilisateur dans le processus, depuis un groupe précédemment stocké de paramètres de commande pour assurer un accord amélioré pour la présente condition du processus.

17. Procédé selon la revendication 16, dans lequel la plage de la variable du processus est subdivisée en sous-plages, qui correspondent chacune à un groupe de paramètres de commande précédemment adaptés.

18. Procédé selon la revendication 1, dans lequel l'étape consistant à choisir trois valeurs d'amplitude successives inclut l'étape consistant à indiquer le signe de la première valeur d'amplitude pour déterminer s'il est positif ou négatif, et à inverser les valeurs desdites trois valeurs d'amplitude si le signe de la première amplitude est négatif.

19. Procédé selon la revendication 1, comprenant en outre l'étape consistant à filtrer ledit signal au point fixé avec un filtre accouplé pour empêcher un dépassement d'erreur excessif dans la réponse à un changement au point fixé lorsque l'unité de commande est bien accordée pour un renversement de charge.

20. Procédé selon la revendication 19, comprenant en outre l'étape consistant à accorder de façon adaptive un rapport d'accouplement dudit filtre accouplé pour assurer une valeur de dépassement cible.

21. Procédé selon la revendication 1, comprenant en outre les étapes consistant à engendrer un signal de bruit d'erreur en fonction du signal de réponse qui représente la réponse en boucle fermée du processus, et à mettre à jour une bande de bruit pendant un état de repos du signal de réponse, en fonction du signal de bruit d'erreur.

22. Procédé selon la revendication 1, comprenant en outre l'étape consistant à valider les valeurs d'amplitude mesurées de valeurs extrêmes locales.

23. Procédé selon la revendication 1, dans lequel l'étape consistant à choisir des valeurs d'amplitude successives inclut l'étape consistant à choisir trois valeurs d'amplitude successives desdites valeurs extrêmes locales (El, E2,et E3) telles que le carré de la seconde valeur extrême (E2) est inférieur ou égal à la première valeur extrême (E1) fois la troisième valeur extrême (E3).

24. Procédé pour ajuster automatiquement les paramètres de commande d'une unité de commande (12) utilisée pour réguler un processus (14) ayant un signal mesuré d'une variable du processus (16) pour atteindre une réponse ayant des caractéristiques cibles choisies, comprenant les étapes consistant à :

-   engendrer un signal de réponse d'erreur (29) représentant une réponse en boucle fermée du processus jusqu'à une condition de renversement;
-   engendrer, en fonction du signal de réponse d'erreur (29), des caractéristiques du signal de réponse d'erreur qui incluent un signal d'évanouissement représentant l'évanouissement du signal de réponse d'erreur, un signal de dépassement représentant le dépassement du signal de réponse d'erreur, et un signal de période représentant la période du signal de réponse d'erreur afin de caractériser la réponse du processus ;
-   choisir, en fonction du signal d'évanouissement et du signal de dépassement du signal de réponse d'erreur, au moins trois valeurs d'amplitude successives, telles que ledit l'évanouissement est supérieur audit dépassement, afin de choisir des valeurs d'amplitude représentatives d'une réponse choisie du processus ;
-   engendrer un signal vis-à-vis du type de processus, représentatif du type de processus que l'on régule, en fonction du signal d'évanouissement, du signal de dépassement, et de données interpolées depuis au moins deux types de processus, et
-   calculer automatiquement au moins un des paramètres de commande de l'unité de commande dans la réponse audit signal de type de processus pour ajuster l'unité de commande afin d'améliorer la différence entre lesdites caractéristiques déterminées et les caractéristiques cibles.

25. Procédé selon la revendication 24, dans lequel l'étape consistant à calculer des paramètres de commande inclut l'identification d'une réponse instable du processus et la génération d'au moins un paramètre de commande en fonction du signal quant au type de processus.

26. Procédé selon la revendication 24, dans lequel l'étape consistant à calculer des paramètres de commande inclut l'identification d'une réponse sur-amortie, et la génération d'au moins un paramètre de commande en fonction du signal de période.

27. Procédé selon la revendication 24, dans lequel l'étape consistant à calculer des paramètres de commande inclut l'identification d'un signal de réponse représentatif d'une réponse quadratique amortie, et la génération d'au moins un paramètre de commande en fonction du signal quant au type du processus.

28. Système de commande auto-accordé (10) comprenant :

-   une unité de commande (12) ayant des paramètres de commande pour réguler un processus (14) ayant un signal mesuré (16) pour une variable du processus ;
-   des moyens (23) pour engendrer un signal de réponse d'erreur (29) représentant une réponse en boucle fermée du processus jusqu'à une condition de renversement ;

- un adaptateur (20) pour ajuster automatiquement des paramètres de commande de l'unité de commande, ledit adaptateur (20) comprenant :

-- des moyens (50) pour mesurer des éléments de motif caractéristiques en amplitude dudit signal de réponse d'erreur ;

-- des moyens (50) pour choisir trois valeurs d'amplitude successives dudit signal de réponse d'erreur pour produire des caractéristiques mesurées de l'évanouissement et du dépassement dudit signal de réponse d'erreur, dans lesquelles ladite caractéristique mesurée d'évanouissement est supérieure à ladite caractéristique mesurée de dépassement ; et

-- des moyens (50) pour ajuster automatiquement l'un au moins des paramètres de commande de l'unité de commande pour améliorer la différence entre l'une desdites caractéristiques mesurées et une caractéristique cible.

29. Système de commande auto-accordé selon la revendication 28, dans lequel lesdits moyens pour ajuster les paramètres de commande incluent :

- des moyens pour engendrer, en fonction des caractéristiques mesurées, un signal quant au type de processus, représentatif du type de processus que l'on régule, et

- des moyens pour calculer l'un au moins des paramètres de commande de l'unité de commande en fonction du signal quant au type de processus.

30. Système de commande auto-accordé selon la revendication 28, dans lequel les moyens pour déterminer des caractéristiques de motif incluent des moyens pour déterminer un rapport de dépassement et un rapport d'évanouissement dudit signal de réponse.

31. Système de commande auto-accordé selon la revendication 28, dans lequel le signal d'erreur représente la différence entre le signal variable quant au processus et un signal à un point fixé.

32. Système de commande selon la revendication 28, dans lequel ledit signal d'évanouissement est une quantité sans dimension caractérisée par l'équation :

$$\text{Évanouissement} = [E_{(3+N)}-E_{(2+N)}]/[E_{(1+N)}-E_{(2+N)}]$$

dans laquelle E est l'amplitude de l'erreur associée au pic choisi, et N est le nombre de pics que l'on saute avant de choisir les trois amplitudes successives.

33. Système de commande selon la revendication 28, dans lequel ledit signal de dépassement est une quantité sans dimension caractérisée par l'équation :

$$\text{Dépassement} = E_{(2+N)}/E_{(1+N)}$$

dans laquelle E est l'amplitude de l'erreur associée au pic choisi et N est le nombre de pics que l'on saute avant de choisir les trois amplitudes successives.

34. Procédé selon la revendication 1, dans lequel on engendre un signal de période en fonction dudit signal de réponse d'erreur, le signal de période représentant la période du signal de réponse d'erreur pour caractériser la réponse du processus.

35. Procédé selon la revendication 1, dans lequel ledit signal d'évanouissement est une quantité sans dimension caractérisée par l'équation :

$$\text{Évanouissement} = [E_{(3+N)}-E_{(2+N)}]/[E_{(1+N)}-E_{(2+N)}]$$

dans laquelle E est l'amplitude de l'erreur associée au pic choisi, et N est le nombre de pics que l'on saute avant de choisir les trois amplitudes successives.

36. Procédé selon la revendication 1, dans lequel ledit signal de dépassement est une quantité sans dimension caractérisée par l'équation :

$$\text{Dépassement} = E_{(2+N)}/E_{(1+N)}$$

dans laquelle E est l'amplitude de l'erreur associée au pic choisi et N est le nombre de pics que l'on saute avant de choisir les trois amplitudes successives.

37. Procédé selon la revendication 34, dans lequel ledit signal de période est une quantité temporelle caractérisée par l'équation :

$$T = T_{(2+N)} - T_{(1+N)}$$

Dans laquelle N est le nombre de pic que l'on saute avant de choisir les trois amplitudes successives.

FIG. 1

FIG. 2

EP 0 610 189 B1

SELF-TUNING CONTROL SYSTEM

AN ANALOG REPRESENTATION
OF A DIGITIZED
PID CONTROLLER

*12*

*18*

LOAD

*28*

SET POINT

*26*

$\dfrac{1+kIs}{1+I_e}$ *38*

*40* Σ +  −

$\dfrac{1}{P}$ *30*

*42* Σ + +

LIMITER *36*

*22*

*24*

PROCESS *14*

*16*

*25a*

*33*

$\dfrac{1}{1+Is}$ *32*

$\dfrac{1+110s}{1+0.10s}$ *34*

Σ + − *29*

*25a*

*25d*

*25c*

*25b*

CPU *50*

ROM *52*

RAM *54*

*20*

*31*

USER SPECIFIED VARIABLE

FIG. 3

FIG. 4

## FIG. 5

A

**STATE 2**

100 — IS PERIOD TIME > W$_{max}$ ? — Y → 102 — DECLARE ERROR= PEAK 2 AND SET 1/2 PERIOD = W$_{max}$ → B

N

104 — IS ERROR ≥ PPNB ? — Y → 106 — SEARCH FOR KNEE AND SET 1/2 PERIOD= 1-1/2 TIME TO KNEE

N

105 — LOCATE PEAK 2

108 — CAN KNEE BE CONFIRMED ? — N → (to LOCATE PEAK 2) — Y → 112 — SET E2 = KNEE → B

110 — CAN PEAK 2 BE CONFIRMED ? — N

**60**

SEARCH FOR 2ND PEAK MODE

**STATE 3**

114 — IS ERROR > E1 AND E2>0 ? — Y → 116 — DECLARE 1ST AND 2ND PEAKS FALSE PEAKS → C

N

118 — IS MEASUREMENT OUT OF BOUNDS OR E3 >E1 & E2< 0 ? — Y → 120 — DECLARE PROCESS UNSTABLE → B

N

121 — WAS START FROM SETTLING STATE ? — Y → B

N

SEARCH FOR 3RD PEAK MODE

**62**

122 — IS TIME SINCE PEAK 2 >W$_{max}$ AND E3 NEG OR IS T$_1$ >3*T$_2$ ? — Y → B ← 130 — SET E3 = KNEE

N

124 — IS ERROR < PP NOISE BAND ? — Y → 126 — SEARCH FOR KNEE → 128 — IS KNEE CONFIRMED ? — Y → (to SET E3)

N

132 — CAN PEAK 3 BE CONFIRMED ? — N — Y → D

28

FIG. 6

FIG. 7

EP 0 610 189 B1

**FIG. 8**

30

FIG. 9

FIG. 10

FIG. 11

FIG. 12